# EUROPEAN PATENT SPECIFICATION

(11) **EP 2 150 118 B1**
(45) Date of publication and mention of the grant of the patent: **17.07.2013**
(21) Application number: 08755293.1
(22) Date of filing: 12.05.2008
(51) Int. Cl.: B65D 21/08

(54) **LOW PRESSURE DOUGH PACKAGING**
NIEDERDRUCKVERPACKUNG FÜR TEIG
EMBALLAGE DE PÂTE À BASSE PRESSION

(30) Priority: 11.05.2007 US 928706 P
(43) Date of publication of application: 10.02.2010
(73) Proprietor: GENERAL MILLS MARKETING, INC., Minneapolis, MN 55440 (US)
(72) Inventor: DOMINGUES, David J., Plymouth, Minnesota 55441 (US); FREEMAN, Richard, Saffron Walden Essex CB101JF (GB); GARBE, Joanne J., Columbia Heights, Minnesota 55421 (US); THURBUSH, Claire, Minneapolis, Minnesota 55419 (US); KACKMAN, Scott, New Hope, Minnesota 55428 (US); KIRK, David A., Coon Rapids, Minnesota 55448 (US); PURKEY, Todd, Apple Valley, Minnesota 55124 (US); SINCLAIR, Kay, Newmarket Suffolk CB88HZ (GB); STACEY, Gary, Cambridge Cambridgeshire CB43QE (GB); WHITE, Matthew C., Linton Cambridgeshire CB214NR (GB)
(74) Representative: Vossius & Partner
(86) International application number: PCT/US2008/063384
(87) International publication number: WO 2008/141267

(56) References cited:
- EP-A2- 1 142 791
- US-A- 1 988 091
- US-A- 2 811 455
- US-A- 4 456 134
- US-A- 5 941 037
- US-A1- 2005 106 293
- US-A1- 2005 205 156
- US-A1- 2006 263 494
- US-B1- 6 733 803
- US-B2- 7 169 419

## Description

### FIELD OF THE INVENTION

The invention described herein relates to a dough product package according to the preamble of claim 1 and to a method of packaging dough therewith. The dough product contained in the package can be any of a wide variety of leavenable dough products that can be used by a consumer to "home bake" a dough to produce a desirable hot, fresh-baked item. Many such items are proofed prior to baking, and for consumer convenience may be partially or fully proofed prior to purchase and prior to use by the end consumer. Such products, sold after proofing or partial proofing, are examples of products referred to as "pre-proofed." Examples of pre-proofed dough products include breads and bread-like products that generally contain a leavening ingredient and include but are not limited to loaves of bread such as French bread, white or whole wheat bread, bread sticks, biscuits (i.e., "soda biscuits"), rolls, pizza dough, and the like.

### BACKGROUND OF THE INVENTION

One technique for preparing a pre-proofed dough product for sale is by use of a package having a fixed volume and venting, and allowing a contained dough composition to proof and expand inside of the packaging and seal the container from inside, e.g., self-sealing packages such as wound paperboard or paperboard canisters. Such products include dough formulations that can be, but are not necessarily, chemically-leavenable.

For example, one method of accommodating proofing of a chemically-leavenable dough composition during or prior to refrigerated storage is to place an unproofed dough composition in a fixed volume package. The dough is allowed to proof or partially proof inside of the package. With expansion of the dough composition, the dough volume increases to fill the entire package volume, and upon further expansion will increase the pressure inside the canister (if desired). The package can be, for example, a wound canister formed from composite paperboard and spirally wound into a cylinder. The initial volume of dough packed into the canister can be less than or equal to the canister volume and as the dough proofs, gas is expelled through venting. Once the dough reaches the approximate volume of the canister, the pressure increases to force the dough against canister end caps to seal gas passages around the end caps of the canister.

There is continuing need for new types of packaged pre-proofed dough products that may be refrigerator stable for multiple weeks of refrigerated storage. Similarly, there is continuing need for new methods of packaging and preparing such packaged dough products. Particularly useful and economical packages are those that are simple and durable, such as flexible film packaging with no pressure release valve.

The invention relates to dough packages that include various designs and constructions for allowing a dough to expand and proof or pre-proof within a package suitable for refrigerated storage. The package may be of a fixed volume or a variable volume and may include creative design features to allow gas to be expelled from the package. The packages generally may be in the form of any of a chub, cylinder (e.g., can or canister), pouch, etc., and any of the inventive packages can be pressurized (e.g., of an internal pressure of 2 bar (15 psig) or greater) or non-pressurized (of an internal pressure of less than 2 bar (15 psig)) upon expansion of the dough inside of the container. (Packages as descried herein are can be particularly useful with non-pressurized dough container configurations.) An elongate package may be a cylinder, or other shape tube (e.g., square, rectangular, triangular), with two endcaps, one at each end. The endcaps may be removable or otherwise openable to allow the package to be opened, or, the package may be opened by disassembling the tube, such as by unwinding a wound tube.

Packages of the invention are dough product packages that may include materials that are flexible, rigid, or semi-rigid, for ends or sides of a package. Gases such as carbon dioxide, oxygen, or an inert gas (e.g., from flushing) may be present at the package interior due to packaging and processing history or due to proofing of the packaged dough composition and attendant production of carbon dioxide by a dough leavening system. A dough may also produce carbon dioxide and experience expansion within the package by proofing or partial proofing after being inserted into the package. Any gas that is present in the interior space of the package during dough expansion is desirably expelled from the package as the dough expands into the internal volume of the package. Various modes are described for allowing gas to be expelled from a package.

The package sides and ends can be of flexible, rigid, or semi-rigid packaging material, or a combination of these, and may include material impermeable to gases such as oxygen, carbon dioxide, water vapor, etc. Exemplary flexible materials include flexible polymeric films including those that are presently known or that may be developed in the future for use in packaging dough compositions. Exemplary rigid or semi-rigid materials include paperboard, plastic, and the like. For example, sides of a package may be in the form of a rigid or semi-rigid cylindrical can or canister, with end caps. The can or cylinder may be made of any desirable material such as paper, paperboard, plastic or another polymeric material. End caps may also be made of any useful material such as paperboard, paper, foil, metal, metal coated paper, plastic, or another polymeric material.

The dough composition can be any type of leavenable dough composition, e.g., a proofed or improofed dough composition that is storage-stable at refrigerated storage temperature. The dough composition can be leavenable by action of yeast or chemical leavening agents. Examples of useful types of dough compositions include chemically-leavenable biscuits ("soda" biscuits), breads, and bread-like dough compositions including French bread, bread rolls, croissants, sweet rolls, pizza crust.
U.S. Patent No. 6,733,803 discloses a refrigerated yeast-leavened dough in a package having a one-way valve and a substantially oxygen free atmosphere surrounding the dough.
U.S. Patent Publication No. 2006/0263494 discloses dough compositions in flexible packages. The dough composition may be refrigerated or frozen, proofed or unproofed. The dough composition inside the flexible package can proof and expand without substantially stretching the flexible package and without the need for substantial headspace, but due to a change of form of the packaged product, e.g., due to a change in shape from a shape that has a low ratio of volume to surface area to a shape that has a higher ratio of volume to surface area, or due to a change from a wrinkled or folded form to an unfolded or less wrinkled or unwrinkled form.
EP Patent No. 1142 79 discloses a dough product package according to the preamble of claim 1.

### SUMMARY OF THE INVENTION

Certain embodiments of the invention include a pre-proofed dough composition packaged in a low pressure flexible package, optionally and preferably with little or no headspace. A low pressure package can mean a package that is substantially air tight, with an internal pressure that is typically less than 2 bar (15 psig) (pounds per square inch, gauge) (gauge pressure is absolute pressure minus atmospheric pressure, i.e., psig is psi absolute minus approximately 1 bar or 14.7 psi; for example a gauge pressure of 0 psig inside a package is a pressure of approximately 1 atmosphere). Examples of low pressure packages include canisters, chubs, and pouches that do not exhibit a pressurized (greater than 15 psig) interior. A dislike of some consumers with the use of certain current pressurized refrigerator-stable dough products is that pressurized packages can pop when opened. Advantageously, embodiments of packages described herein, which include a non-pressurized packaging system, can avoid this popping, because the internal pressure does not build to the same levels of the current consumer products that do pop when opened.

The dough product package according to the invention and a method of using it is defined by the claims.

Methods of the invention can involve placing unproofed dough into a package that that is designed to allow the dough to expand while proofing or partially proofing inside of the package. The package may optionally be flushed with carbon dioxide, or an inert gas such as nitrogen, during a step of placing the dough into a package. The dough, within the package, can increase in size by expansion due to a leavening agent, to take up interior space of the package. The package can be either of a fixed volume or a variable volume. A fixed volume package may include venting that allows gases inside of the package to be expelled. In other embodiments, a variable-volume package may expand to increase in volume as the dough inside of the package also expands. With either a fixed or a variable volume package, the dough can expand and the final pressure of the dough can depend on the amount of expansion of the dough relative to the fixed or expanded volume of the package. A package, upon expansion of the dough, may be pressurized (e.g., have an internal pressure of 2 bar (15 psig) or more) or may be non-pressurized (e.g., have an ambient internal pressure (0 psig, 1 atm) or a pressure in the range from 1 bar to 1.7 bar (0 psig to 10 psig), e.g., from 1.2 to 1.6 bar (3 psig to 8 psig)).

In certain embodiments the package containing the expanded dough can include limited headspace, preferably very little or no headspace. "Headspace" refers to the internal volume within a package that is not taken up by dough composition; i.e., the internal volume as packaged not including the dough product. The headspace of a packaged dough composition described herein can be, e.g., less than about 20 percent (dough cans) of the total internal volume of the packaged product, such as, less than 3 percent of the total internal package volume.

Exemplary packaged dough products of the invention can be designed to produce a packaged product of a dough with a desired raw specific volume as measured inside the package (e.g., from 1.2 to 2.0 cc/gram), and a package having an internal pressure within a desired range (e.g., 1 to 2 bar (0 to 15 psig)).

The invention allows a dough composition to expand, e.g., proof or partially proof, inside of a package. This advantageously reduces steps of handling the dough composition that would otherwise be required if the dough composition were first proofed or partially proofed outside of the package, and then placed into a package in an expanded condition. Additionally, proofing or partially proofing after packaging may reduce or eliminate potential contamination of a dough product.

In different embodiments, a dough may be packaged and stored at refrigerated or frozen conditions, proofed or unproofed. A dough may for example be packaged in an unproofed condition and refrigerated, with the dough proofing during refrigerated storage following packaging. Alternately, a dough may be packaged in an unproofed condition, then frozen before being proofed; the dough may be stored and optionally shipped and sold in the unproofed frozen state, then thawed, after which the dough can proof within the package.

As used in the present description, "proof" and "proofing" relate to a step before baking of a dough composition that allows at least partial expansion (i.e., at least partial proofing) of a dough composition by giving time to allow yeast or chemical leavening agents to produce leavening gas that forms bubbles within the dough composition and thereby expands the dough composition to a desired volume.

"Pre-proofed" means that a dough product does not require a proofing step after removal from refrigerated or frozen storage, prior to cooking, e.g., baking.

The term "unproofed" is used as generally understood in the dough and baking arts, e.g., to refer to a dough composition that has not been processed to include timing intended to cause or allow proofing or intentional leavening of a dough composition. For example, a dough composition may not have been subjected to a specific holding stage for causing the volume of the dough to increase by 10% or more.

### BRIEF DESCRIPTION OF THE DRAWINGS

Figure 1 illustrates various methods of accommodating gas release in dough packaging configurations, e.g., gas releases from a dough contained in the package and the package accommodated the release by expelling the gas from the container, by expansion of the container, etc.
Figures 2 and 3 illustrate and describe certain examples of direct methods and package features for accommodating gas release.
Figures 4,5,6,7 illustrate and describe examples of direct/expanding methods of accommodating gas release, and related product features.
Figures 8 9,10, and 11 illustrate and describe examples of expanding methods of accommodating gas release and related product features.
Figure 12 illustrates and describes examples of methods of accommodating gas release that involve vacuum, and related product features.
Figures 13 and 14 illustrate and describe examples of method of accommodating gas release that involve an openable endcap, and related product features.
Figure 15 illustrates and describes an example of a package sealed using a ring or ring clip.
Figure 16 illustrates and describes an example of an end portion of a cylindrical can.
Figure 17 illustrates and describes an example of a vented package.
Figure 18 illustrates and describes an example of an expandable package, e.g., variable-volume cylindrical package.
Figujre 19 illustrates and describes a package that includes shrinkwrap.
Figure 20 illustrates and describes a package that includes an external securing mechanism.
Figure 21 illustrates and describes a package that includes an endcap.
Figure 22 illustrates and describes a package that includes an endcap.
Figure 23 illustrates and describes a package that features a wound can or canister. 23
Figure 24 illustrates and describes a package that features a wound can or canister.
Figure 25 illustrates and describes a package that features a vent.
Figure 26 illustrates and describes a package that features an endcap.
Figure 27 illustrates and describes a package that features a wound can or canister.
Figure 28 illustrates and describes a package that features a garotte.
Figure 29 illustrates and describes a package that features a threaded endcap.
Figures 30 through 40 illustrate and describe packages that feature an endcap.
Figure 41 illustrates and describes a package that features a vented end.
Figure 42 illustrates and describes a package that features expanding parts.

### DETAILED DESCRIPTION OF THE PREFERRED EMBODIMENTS

The invention may be more completely understood in consideration of the following detailed description of various embodiments of the invention in connection with the accompanying drawings, in which:

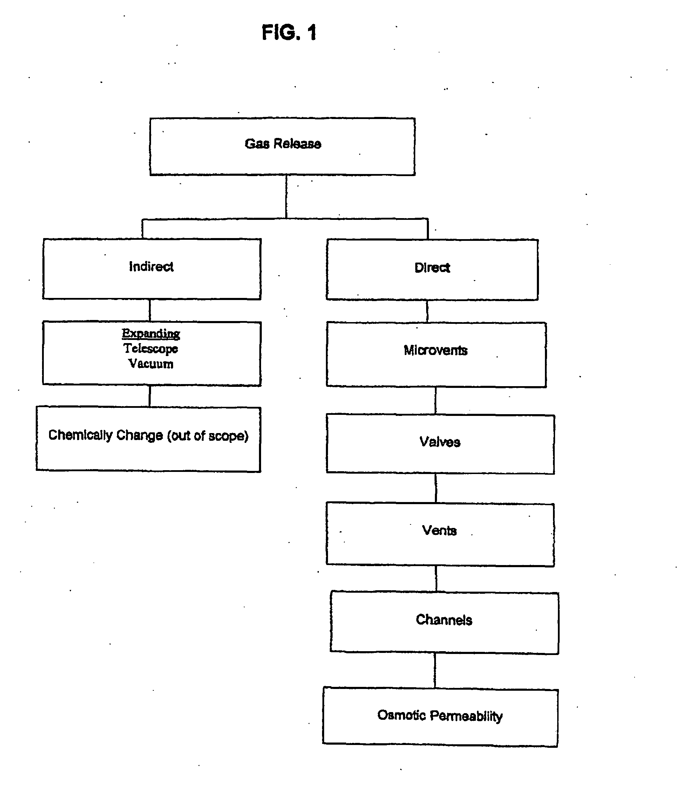

Referring now to figure 1, this shows a chart of different methods of releasing gas from a dough composition or a container that includes a dough composition, to allow proofing of the dough composition after the dough has been placed into a package. One general method of allowing gas release and expansion of the dough is referred to as "indirect" gas release, which allows the package of the product to contain an expanding dough product, either by expanding along with the dough or by including space into which the dough can expand. Indirect methods can be accomplished by a dough package that can expand or telescope, or that has been evacuated (see left side "Expanding, Telescoping, Vacuum"). Another a general type of method is the "direct" method, by which gas is vented from the interior of the package to an exterior through channels, vents, valves, or by osmotic permeability.

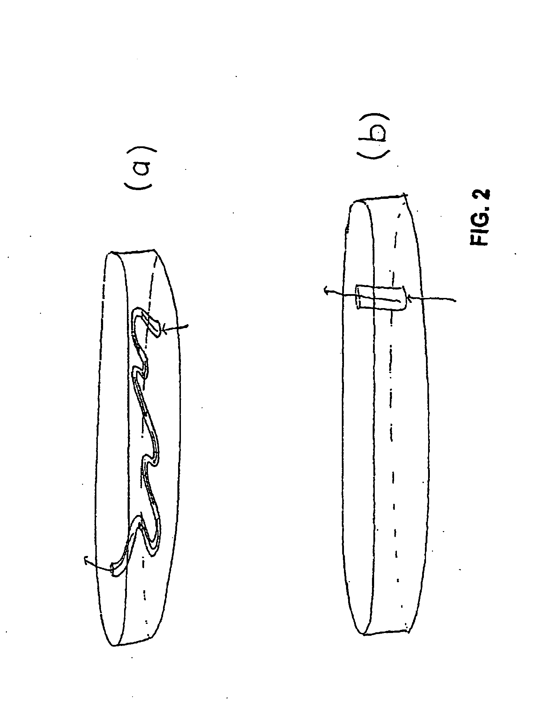

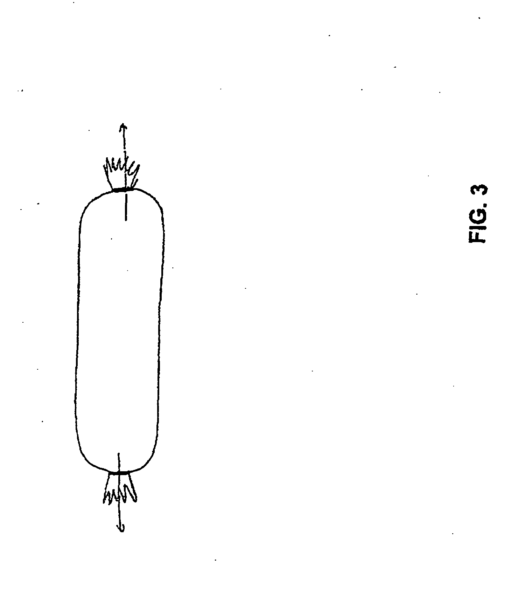

Figure 2 shows two types of direct venting methods. A first is venting of gas through a tortuous path. A second is venting gas through a straight channel. Either can be used with any packaging configuration such as a plastic or paperboard canister, pouch, or chub. The tortuous path or straight vents may be located, for example, at a side wall of a chub, canister, or pouch, at an end-cap of a canister or can, at a seam of a pouch, or at a cinched or crimped, closed end of a chub (see figure 3).
Fig. 2(a): As pressure increases, gas escape is restricted by a tortuous path. Fig. 2(b): As pressure increases, gas escape through a straight channel. >
Fig 3: Chub-Gas can escape through the crimped ends.

It is also disclosed that vents can be various in design, such as micro-vents, cinched apertures, boundaries between thermo-sealed pieces of a package, boundaries between a canister body and an end cap, valves, etc. A vent can be a one-way valve, which is sealed in one direction.

A vent may become sealed by any method, such as by dough that expands within the package to contact and close a vent, or by a mechanical closure that is actuated by expanding dough or by gas released from the dough. Specifically, a dough composition inside of a package that contains vents can expand to contact, cover, or fill the vent in a manner that will close the vent and prevent further gas from passing through the vent in either direction. Alternately, a vent may be located next to a mechanical structure or closure that is actuated upon expansion of dough or release of gas by the dough; the mechanical structure may be a hinged gate or a moveable sheet, or the like, that is moved by expanding dough to cover a vent from the inside of the package, to cover and seal the vent and prevent further venting.
- Vents-start as a hole and pinches off as pressure increases
- Any commercialized 1-way valve

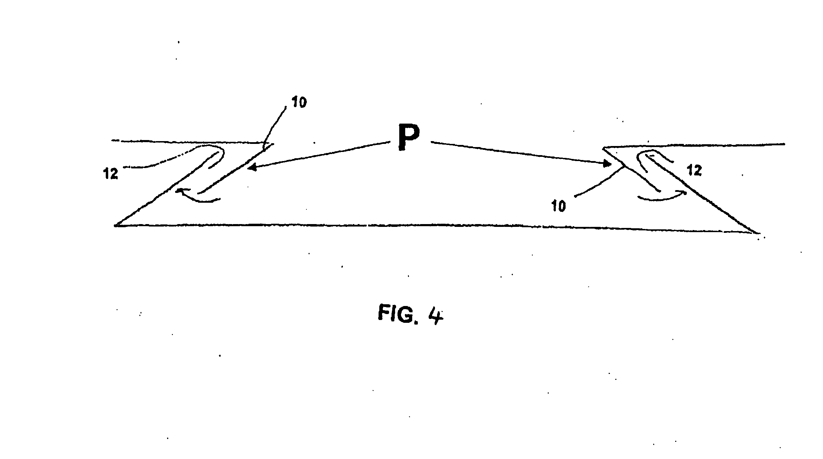

Figure 4 illustrates a specific example of a mechanical structure that can be moved by dough that expands within an interior of a dough package. The dough expands to come into direct contact with "wings" 10 and the pressure of the expanding dough causes wings 10 to move in a manner that closes opening or vent 12.

As pressure increases within the can, flexible "wings" bend in the direction of the arrows and the package is sealed.

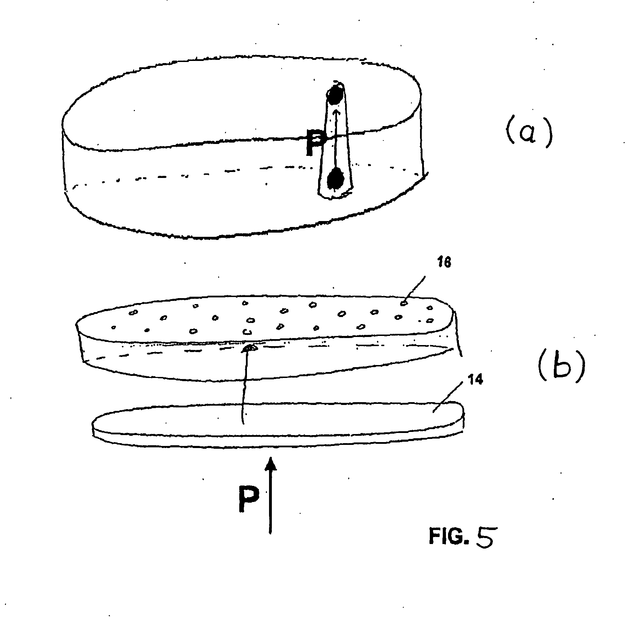

Figure 5 illustrates two examples of a mechanical structure that can be moved by expanding dough to be closed from the inside of the package. The top drawing of figure 5 shows a ball valve that can be in the form of a ball contained in a channel, the channel optionally including a closing or tapering diameter so that the movement of the ball causes the channel to be closed. The ball can be moved by dough that expands to contact the ball and move the ball through the channel to a position that closes the channel. The lower drawing shows a sheet or flat disk 14 of material located between a dough composition (not shown) on one side and holes, vents, or channels 16 of a package surface on the other side. As the dough expands within the package the sheet or disk 14 moves into contact with the portion of the package that contains holes, vents, or channels 16, and the disk 14 covers the holes, vents, or channels, 16 to prevent further venting.

Fig. 5(a): Ball valve concept-As pressure increases, the ball is forced up through an angled channel until the opening to the package is sealed off. Fig. 5(b): Reed valve concept-As pressure increases, there is a flat disk that is pushed up against a cap with holes in it. As the 2 come together, the package is sealed off.

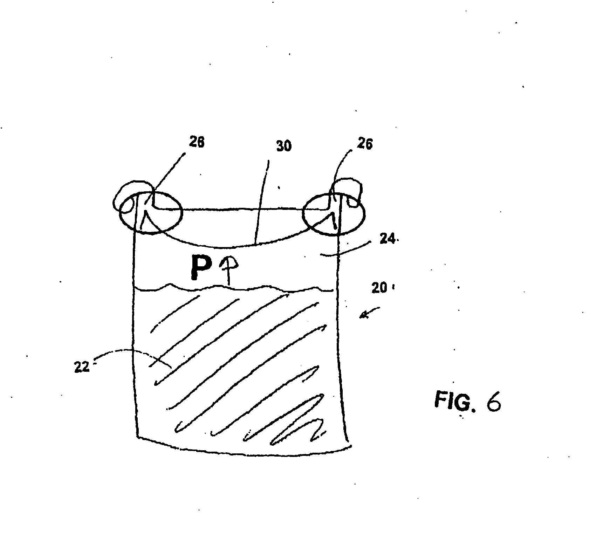

Figure 6 illustrates another example of a mechanical structure that can be moved by expanding dough to cause the package to be sealed from the inside of the package. Packaged dough product 20 includes dough 22, headspace 24 and open channels 26 through which gas can escape while dough 22 expands. Mechanical closure 30 allows gas to escape through vents 26, until dough 22 contacts closure 30, and closure 30 moves to cover or close gaps 26, after which further venting is prevented.

As pressure increases, the pinched pieces slide up and seal off the container.

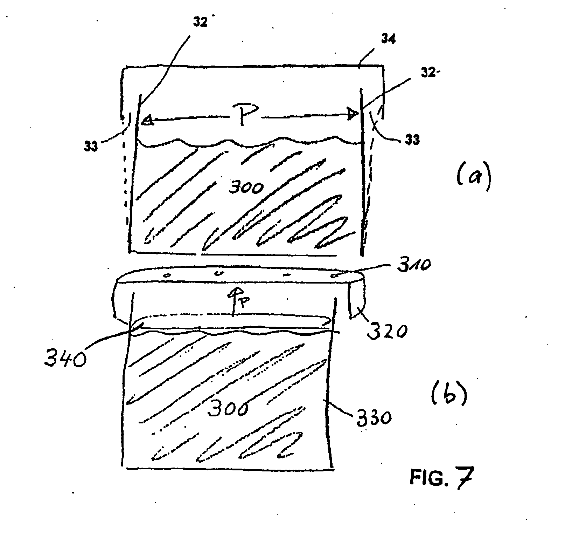

Figure 7 illustrates two example of a mechanical structure that can be moved by expanding dough 300 to be closed from the inside of the package. The top drawing shows a package that includes sidewalls 32 and endcap 34, with gap (vent) 33 between the two allowing venting. As dough 300 inside of the container expands, gas escapes through gaps (vents) 33 until pressure from the expanding dough 300 causes sidewalls 32 to contact the lip of endcap 34, sealing gap 33 and preventing further venting. Sidewalls 32 can be biased to remain open until a desired pressure occurs within the package to close gaps 33. Not shown at the top illustration of figure 7, but optionally included in this and similar packaging designs, is the optional use of a caulk, sealant, or other material to improve the seal between the lip of endcap 34 and sidewalls 33. For example, an elastomeric, optionally adhesive, bead may be placed between these two surfaces so that when the surfaces contact, an air-tight seal results.

The lower picture at figure 7 shows a similar package configuration except that vents 310 are in the form of apertures in the endcap 320, and the mechanical structure that closes the vents 310 in the endcap 320 is a membrane or film 340 that is in contact with the dough composition. The film may optionally include an adhesive (e.g., pressure sensitive adhesive) on the side that will contact the eadcap 320. The dough 300 will expand to cause a venting of gas from the headspace of the container until the membrane contacts the endcap 320 to cover the vents 310, after which no additional venting will occur.

Fig. 7(a): As pressure increases, the package's flexible sides bend outward, sealing it. Fig. 7(b): As pressure increases, a piece of film, membrane, or pressure-sensitive adhesive tape rises. When it touches the top of the package, which contains vent holes to allow gas to escape, the tape seals the holes creating an air tight package.

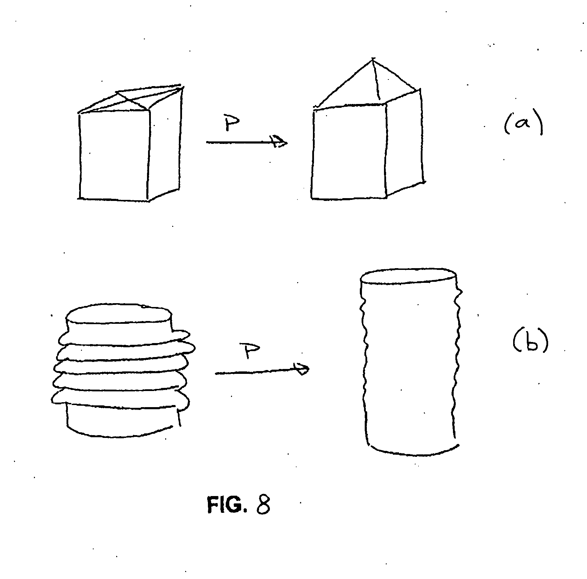

Figure 8 shows two exemplary forms of expanding volume packages. In general, containers that have a variable, increasing volume, can be non-vented and can become pressurized or can be at ambient pressure upon expansion of a dough within the container. The package can be used to contain an unproofed dough composition with little or no headspace. The geometry of the package or the use of folds or wrinkles allows the package to increase in volume by unfolding, unwrinkling, or changing to a shape that includes a larger internal volume. The top drawing shows a "gable top" package that includes folds at a surface of a cube. The folds can unfold to expand from a flat surface to a three-dimensional pyramidal or trapezoidal shape, thereby increasing the total volume of the container. The lower picture illustrates an alternate package geometry that can start as a shortened cylinder having wrinkles or folds of a flexible material along sidewalls of the cylinder. As a dough composition in the package proofs and expands, the dough volume increases and causes the internal volume of the cylindrical package to also increase by unfolding the sidewall surfaces of the cylindrical package.

Fig. 8(a): Gable Top—As pressure increases, the gable top on this paperboard structure pops up to accommodate the gas. Fig. 8(b): Burple—As pressure increases, this structure will extend vertically to accommodate the gas volume.

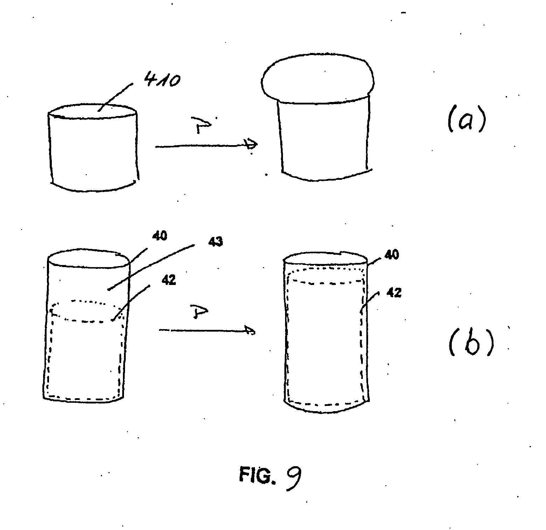

The upper picture of figure 9 shows a cylindrical container that has a wrinkled or folded surface 410 at a top or end of the cylinder. This wrinkled or folded surface 410 includes a film such as a plastic or foil material that is folded and that can expand as illustrated to a larger volume upon expansion of the dough composition within the package.

The lower picture of figure 9 shows a package that includes a primary outer package 40 and a secondary inner package 42. A dough composition is contained by inner package 42, which is also of a design that allows for expansion of inner package 42, and which can be non-vented. Outer package 40 is of a constant volume, and is optionally vented. As inner package 42 expands upon proofing and expansion of the dough composition contained therein, inner package 42 increases in volume and fills the complete volume of outer package 40, with optional venting of any gases contained in headspace 43 of the package, through vents, which are not shown.

Fig. 9(a): As pressure increases, a flexible membrane (e.g., folded or wrinkled foil) will extend upward to accommodate the increased gas volume. Fig. 9(b): Secret Chamber—There is an invisible-to-the-consumer secondary package within the primary package that will expand as needed. Meanwhile, the primary package does not change dimensions.

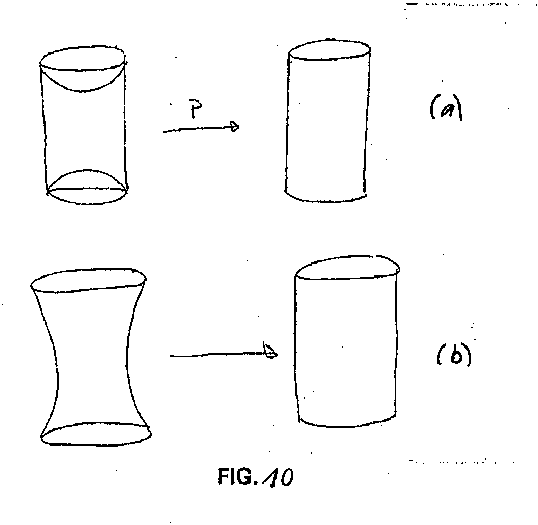

Figure 10 shows two more examples of a cylindrical style container that has a variable, increasing volume, upon expansion of the dough composition inside of the container. The upper container includes concave ends that can change in shape to become flat or convex to increase the total volume of the container. The lower container includes concave sides that can also change in shape to become convex-cylindrical (with a larger total volume), cylindrical, or concave, to increase the total volume of the container. The material of the concave surfaces can be a flexible film that may be elastic or inelastic to optionally allow stretching or no stretching. Like other examples of containers that have a variable, increasing volume, these containers can be non-vented, and can become pressurized or can be at ambient pressure upon expansion of a dough within the container.

Fig. 10(a): Concave Ends―The ends in this example are concave when the package is assembled. As pressure increases, the ends become flat Fig. 10(b): Concave Sides—The sides in this example are concave when the package is assembled. As pressure increases, the sides become vertical.

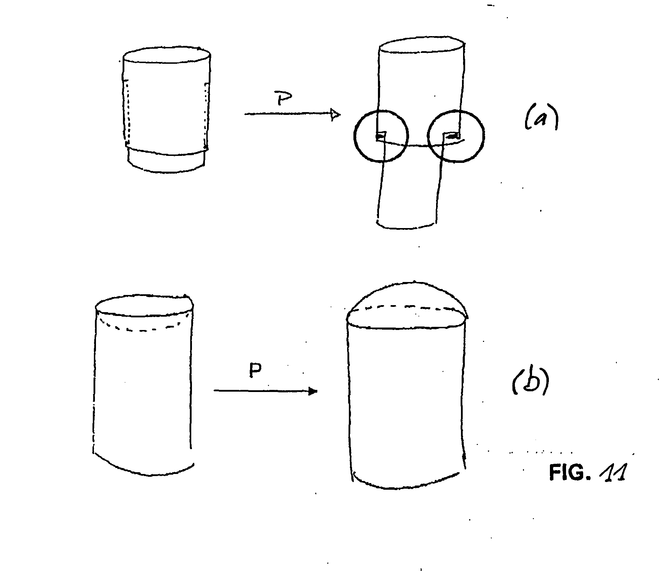

The upper illustration of figure 11 shows a different approach toward an expanding volume package. The package expands by telescoping, by two separate fixed-volume portions of the package sliding away from each other while dough inside of the package expands by proofing. This package may be vented or nonvented and may be pressurized or unpressmrized upon proofing of the dough inside the container.

The lower illustration of figure 11 includes an embodiment as shown in figure 10 , wherein one end of a cylinder changes shape from a flat or convex shape to a concave shape to increase volume of the container upon expansion of dough within.

Fig. 11 (a): Push-Up—This package involves 2 pieces that slide apart as pressure increases. As a maximum pressure is reached, the 2 pieces lock together. Fig. 11(b): Convex/Concave Cap—As pressure increases inside the package, the cap can flex from being concave to being convex.]

It is also disclosed a method of accommodating gas release that involves osmotic permeability, and related product features.

It is also disclosed a method of accommodating gas release that involves a low pressure package, and related product features.

It is also disclosed that a package or a portion of a package can be elastomeric, to allow the package to expand by stretching to accommodate an increased volume of dough.

Balloon Pack-Rubberized package or part of a package (elastomer) expands to accommodate increased pressure.

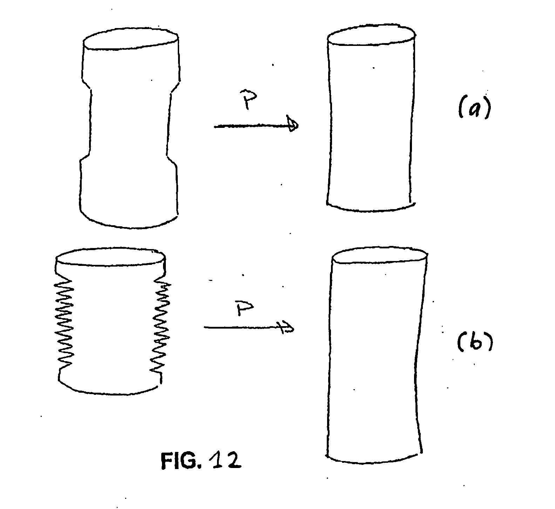

Figure 12 exemplifies how packages with changing geometry and changing volume can optionally or additionally be evacuated using a vacuum during placement of a dough composition within the package. The package can be sealed and non-vented, or vented using a one-way valve. Expansion of a dough composition within the sealed package increases the volume of the dough, which causes the volume of the package to expand and increase from within, optionally with increased pressure due to the expanding dough composition. Fig. 12(a): Milk Jug—This package has flexible side panels that can pop out to accommodate increased pressure. Fig. 12(b): Accordion—This package unfolds like an accordion as the pressure increases.

There are also disclosed certain potential details of the use of vacuum. In specific, a dough package can be evacuated using vacuum to a negative pressure (below 1 atmosphere), and then sealed from outside (not in a "self-sealing" manner) at that negative internal pressure. The package can be non-vented or vented with a one-way valve. The negative internal pressure can induce expansion of the contained dough at a rate greater than expansion would occur at, e.g., ambient pressure. The dough can expand within the package to produce an internal pressure that may be an ambient pressure, a low pressure ((1 to 2 bar 0 to 15 psig), e.g., 1.4 to 1.6 bar (5 to 16 psig)), or to a pressurized condition (greater than 2 bar (15 psig)).
- Package that starts below 1 atm and expands to 1 atm (pull a vacuum and then seal)
- Use vacuum seamers to pull a vacuum on a plastic can. Dough expands fully within 24 hours to make the final package size

It is also disclosed a method of accommodating gas release that involves osmotic permeability, and related product features.

A package may contain a portion that will allow for osmotic permeability of gases to expel the gases from the interior of the package. A film or other osmotically permeable packaging material can be a sidewall, endcap of a fixed-volume container, an expandable or folded portion of a non-fixed-volume (expandable volume) container, etc. The osmotically permeable material can be flexible, elastomeric, rigid, semi-rigid, etc.
- Tyvek—Let's O₂ and CO₂ through but not H₂O
- Film that transmits gas 1 way (out but not in) to preserve shelf life >

It is also disclosed a method of accommodating gas release that involves a low pressure package, and related product features.

A general technique for sealing a package internally may be: allowing dough to expand after placement within a vented package, and the expanding dough contacts vents to seal the vents and prevent further venting.
- Create a package that is 1 atm both inside and out (similar to Perfect Portions)
- Dough expands and plugs vent holes

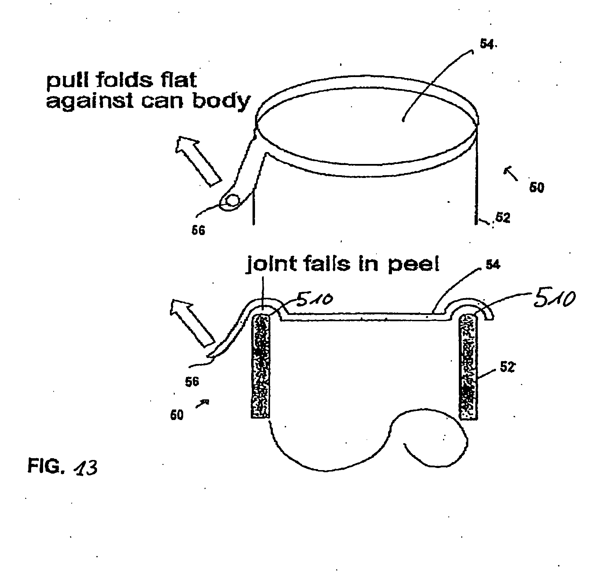

Figure 13 shows an embodiment of a vented can that has an easy-to-open endcap. The can 50 includes sidewall 52 and end cap 54. The end cap is secured to ends of the sidewalls by an adhesive 510. The end cap can be removed by pulling tab 56 to overcome the force of the adhesive 510. The can may be vented or unvented and may be at a reduced pressure (e.g., 1 to 2 bar (0 to 15 psig)) or a pressurized (e.g., greater than 2 bar (15 psig)) condition. The can or canister may be plastic, paperboard, paper, metal, etc.; the end caps can also be of any of these materials. The venting can be any venting that is not inconsistent with the use of adhesive to secure the end cap to the side walls.

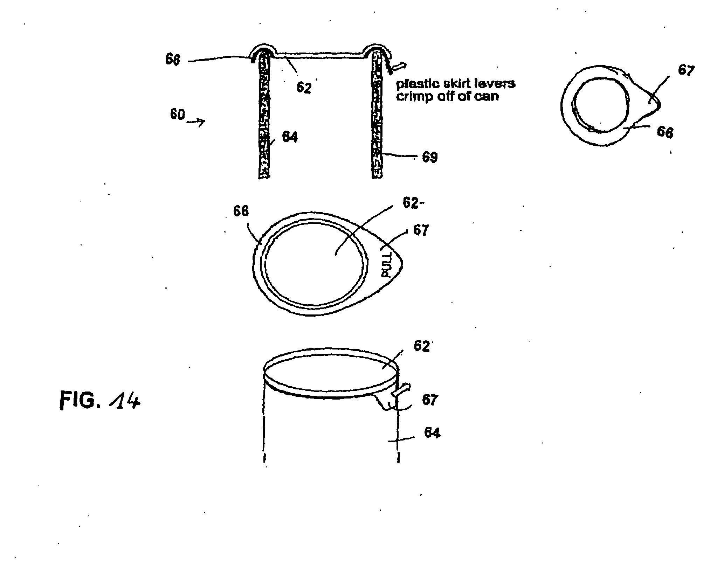

Figure 14 shows another embodiment of a vented can that has an easy-to-open endcap. This embodiment is similar to the design of figure 13, and the design of figure 14 includes an additional piece, an annular "skirt" located between the ends of the sidewalls of the container and the endcap. In specific, package 60 includes endcap 62, sidewalls 64 and annular skirt 66, which includes tab 67. These pieces are assembled together by placing annular skirt 66 at the perimeter of sidewalls 64, and then placing endcap 62 to cover skirt 66. Endcap 62 can be crimped at its outside perimeter around the ends of side walls 64, with skirt 66 being crimped between the perimeter of endcap 62 and side walls 64. Skirt 66 is of a material such as a metal that can be flexed to allow the crimp to be undone by pulling on a tab (67) of the skirt.

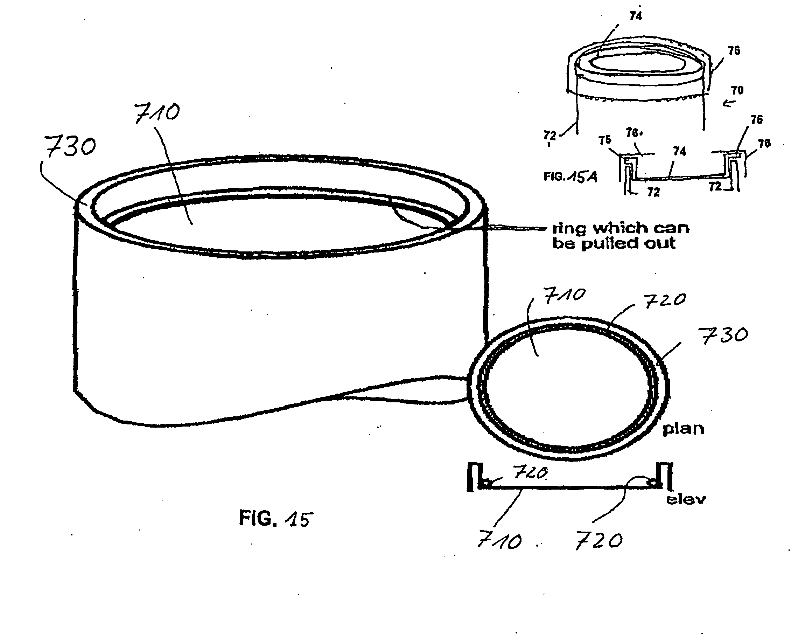

Figure 15 shows another embodiment of a can or canister package sealed using a mechanical "ring" or a "ring clip." 720 The product package includes a cylindrical can or canister with sidewalls 730 that contains a dough composition. A sealing disc 710 is inserted at an end of the cylinder to cover the opening, the disc 710 having a diameter and shape that substantially covers the opening. A "ring" or "ring clip" 720 that is either separate from the disc or attached to the disc 710; holds the disc 710 in place by frictionally engaging the interior surface of the sidewalls 730. The disc 710 can be removed by removing the ring or ring clip 720 to release the disc 710 and open the package. The can may be vented or invented, and pressurized or non-pressurized.

In an alternate embodiment, the ring or ring clip 720 can be replaced by a different mechanical engagement, such as a shrink wrap that is placed on the outside of the package to secure the position of the sealing disc 710. A "shrink wrap" is a heat sensitive plastic material that can be placed around the end of the package and heated, to shrink and conform to the end of the package and mechanically hold an end cap on the end of the cylinder sidewalls 730. Figure 15A illustrates an end of a cylindrical package 70 that includes sidewalls 72, end cap 74, and plastic shrink wrap 76. Cylinder sidewalls 72 are covered by end cap 74, which includes lips 75 that extend laterally at least partially past sidewalls 72. Shrink wrap 74 is wrapped around the assembled cylinder and end cap, to keep end cap secure to the package. To remove the dough, the shrink wrap is removed and the end cap is removed. Like other exemplary fixed-volume packages discussed herein, this package may be vented and either pressurized or non-pressurized during refrigerated storage of a proofed or partially proofed dough.

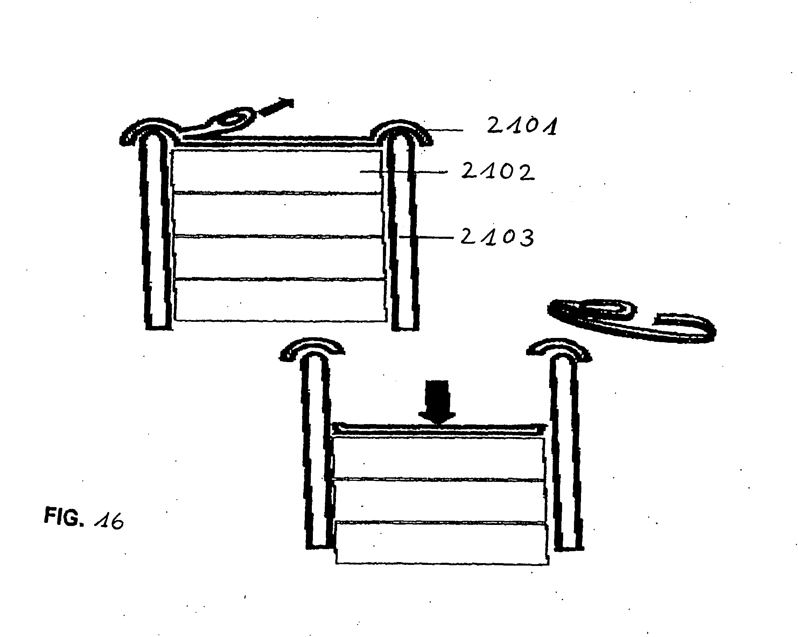

Figure 16 illustrates an example of an end portion of a cylindrical can. The can is sealed by a multi-piece endcap that is scored to allow the endcap to be pulled apart into multiple separate pieces or segments. The endcap is secured to the sidewalls, such as by crimping or by use of an adhesive. To open the package, a tab on the endcap is pulled away from the package to cause the endcap to come apart in pieces along score lines. In the illustrated embodiment, the tab attaches to an annular pull-away portion, and an inner region of the endcap remains as a disc that contacts the dough inside of the package. The disc can be used to push the dough out of the opposite side of the cylindrical package (see arrow).

The reference signs denote:
(2101) : plastic end cup;
(2102) : dough;
(2103) : spiral wound tube

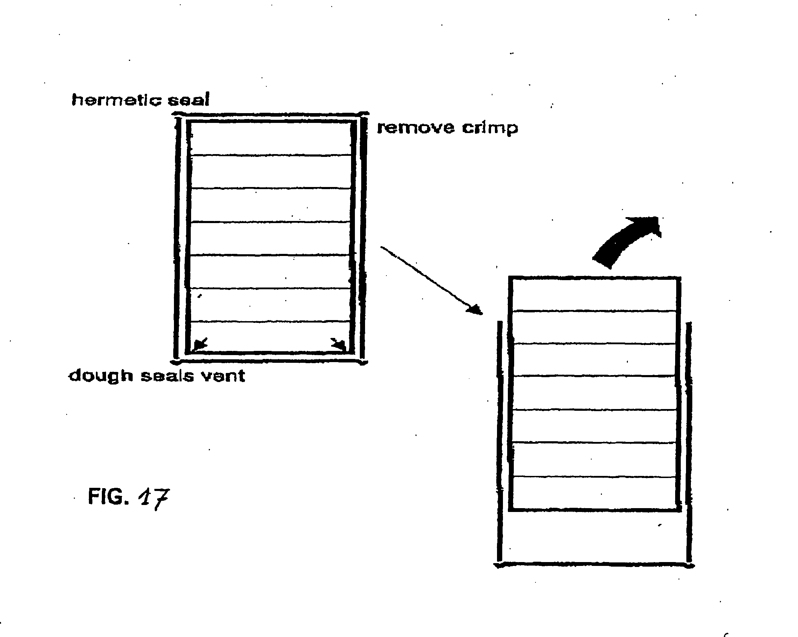

Figure 17 shows an optional feature of a package as described, which is a vent at one and of a package that allows pressure equalization as a dough composition is removed from the opposite end. In specific, one end of a package (pictured as the top, which is hermetically sealed) is closed and sealed by any endcap or scaling mechanism described herein, such as with a crimped endcap or an adhesively-sealed endcap, to produce a non-vented, openable, sealed closure. The other end includes a vent that is sealed internally by a self-sealing mechanism based on dough expanding to seal a self-sealing vent. To remove the dough, the top (as illustrated) end of the can is opened, and the dough is removed, and during removal, pressure within the container is equalized by gas flowing into the package through the vented end at the bottom of the container. Equalized pressure allows the dough to be removed more easily from the can.

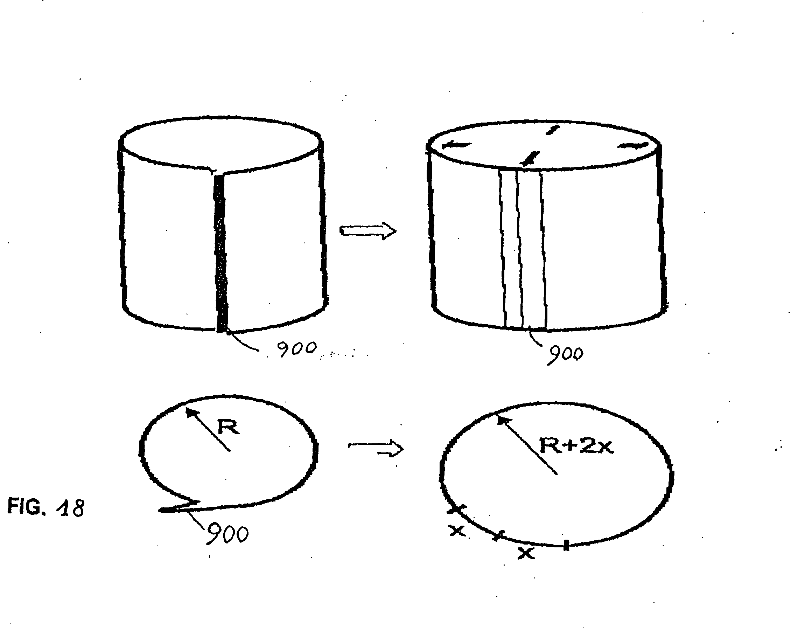

Figure 18 ilustrates a variable-volume cylindrical package that includes cylinder sidewalls having an expandable fold or wrinkle. The package includes an expandable fold 900 or wrinkle along a length of the side portion of the package. The fold 900 or wrinkle unfolds to accommodate the increasing volume of contained dough. The top set of diagrams of figure 18 shows the expandable fold 900 opening from a side perspective view. The bottom set of diagrams of figure 18 shows the expandable folder opening from a top. The package also accommodates an increasing diameter end, at both ends of the cylinder, as the cylinder expands circumferentially.

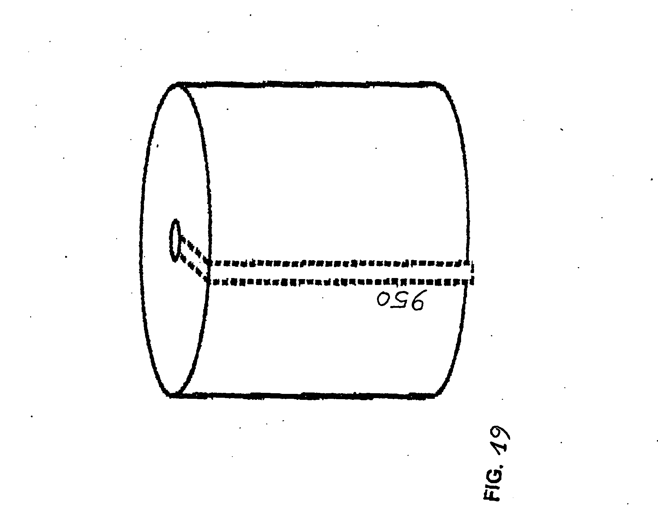

Figure 19 shows an example of a package that is closed and secured using shrinkwrap to hold together an assembled package. The shrinkwrap secures and raps as well as holds the bodystock together. The package is illustrated to be cylindrical but could be of any geometry. As illustrated, an exemplary package can include a tube (which may be cylindrical or otherwise) of paperboard or plastic, and endcaps to cover ends of the tube that contains a dough composition. A plastic shrink wrap outer layer can be used to hold the endcaps against the ends of the tube during a period of refrigeration. A perforated portion or tear strip 950 can be included on the shrinkwrap material, to allow the shrinkwrap to be easily removed and the container opened. Releasing the shrinkwrap weakens the bodystock and releases en raps. The container can be of a fixed or of an expandable volume and may be pressurized or non-pressarized, vented or non-vented.

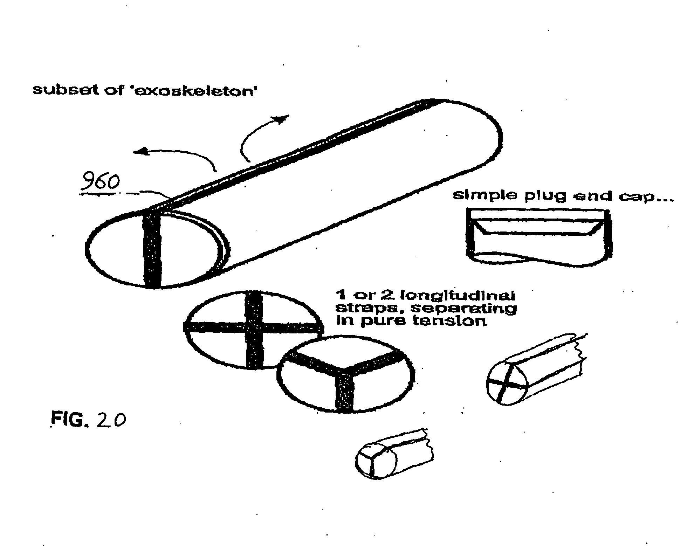

Figur 20 shows another alternate embodiment for securing a removable end or end cap to a closed package as described herein (e.g., vented, non-vented, pressurized, non-pressurized). The illustrated package is cylindrical but could be of any geometry.
End caps are placed over open ends of the package and are held in place by straps, which may be elastic or inelastic. Figure 20 illustrates examples of a single strap 960 that wraps one time around the cylinder by passing the length of the cylinder two times (one time on each side of the package) and traverses each end cap one time. Other configurations are also possible using an elastic or inelastic strap to hold end caps to a package, such as straps that extend along the length of the package three times and four times (see other examples of packages at figure 20).

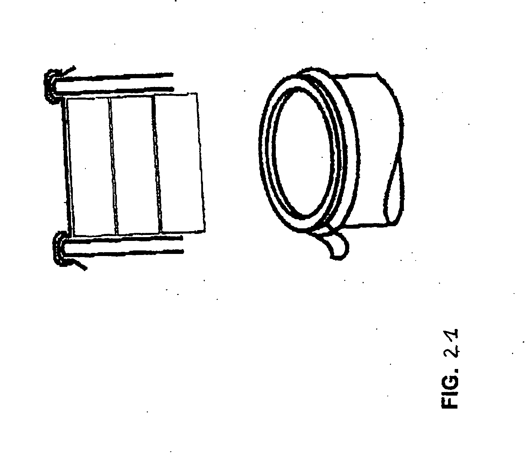

Figure 21 shows another embodiment for securing a removable end or end cap to a closed package as described herein (e.g., vented, non-vented, pressurized, non-pressurized). The package includes an endcap that can be removed by tearing a strip from around the circumference of the package, in the region of the end of sidewalls, to loosen and detach the end or endcap. Various designs can be used to allow removal of the end or endcap by tearing a strip or pieces of packaging near the end. The endcap may be metal crimped around its perimeter over a plastic strip and over the endwalls of the package. To open the package by removing the endcap, the plastic strip can be pulled from beneath the crimped endcap by pulling a tab, which loosens the endcap. In an alternate embodiment, a package (cylindrical can), strip, and endcap can be made of plastic. A pull-away strip is attached to both the package sidewall and the end cap, and is scored around the perimeter of both. The strip can be torn or broken away from the endcap and package by pulling a tab and unwrapping around the package circumference, to allow the endcap to be released from the package and removed to open the package.

Plastic or flexible end, held in place by a standard metal crimp ring. Peel skirt to remove end of can.

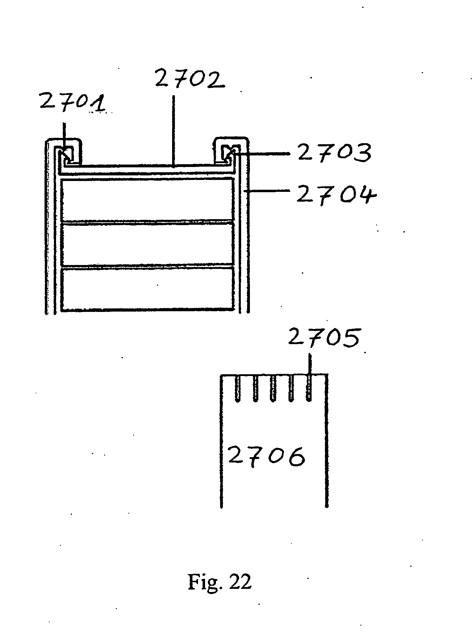

Figure 22 shows an example of an all-paperboard package as otherwise describes herein.
The reference signs denote:
(2701): tear strip or separations;
(2702): pulp moulded cardboard cup;
(2703): heat weld;
(2704): spiral wound tube;
(2705): slit fins heat sealed over (slits allow degassing?)
(2706): spiral tube and slits to allow fold over
A spiral tube (e.g., made of paperboard) is sealed at one end by a paperboard cup or disc covering the open cylindrical end. Ends of the sidewalls are folded over the cup or disc to secure the paperboard cup in place. An optional adhesive or mechanical securing mechanism may be used to secure the folds. For example a thermoplastic (e.g., polyethylene) can be used to secure the folds, or to further seal or secure the end of the container. A tear strip can be included within the folded end to allow separation of the paperboard cup from the sidewalls at a desired time to open the package and remove dough contents.

Fig 22:
- Name: Cardboard End Cap
- Description: Complete cardboard package. Pulp moulded and barrier cup slid in end of tube. The end of the tube is slit all the way round to allow it to be folded over the wall of the cup. These tabs can then be heat welded, using the pe layer within the tube. This holds the cup end in place and forms the seal, but the slits could allow the O₂ to escape and then the dough can expand between the cup wall and the tube. To remove use separations or a tear string to tear at the top of the tube allowing the end cap to be pushed within tube or add tab & allow it to be pulled out.
- Benefit: All card. No extra parts easy dough removal, obvious failure mode.
- Issues: Additional process step, new end cap fitting process, new end cap design
- Processes Affected: Cut to length, crimp end caps
- Manufacturing Route: Cut to length op replaced with cut and slit ends (knife, laser, etc.). End caps then captured by folding slit ends.

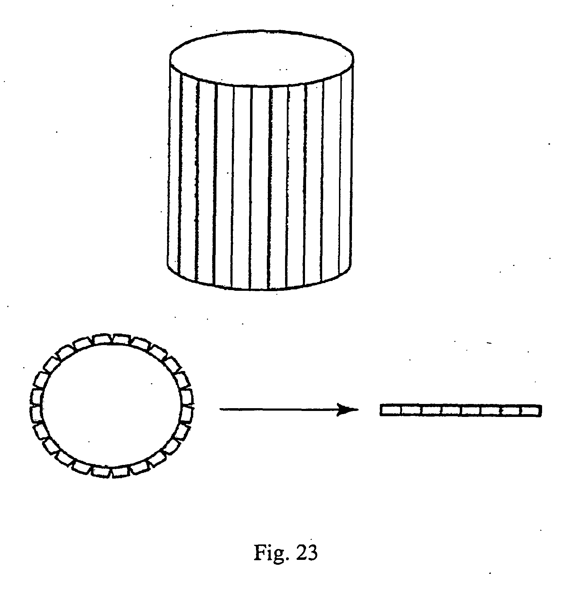

Figure 23 illustrates a feature of a paperboard or plastic material used to prepare a wound can or canister. Addition of ribs or scored lines at a surface of the can is useful to prevent "springback" of the material upon opening. "Springback" is the tendency of a wound cylindrical package such as a can or canister to maintain its cylindrical shaped during opening. Springback is a resistance of the package to the act of opening the package by unwinding the spiral. Ribs or scoring as illustrated can reduce this springback pressure. The ribs or scoring improve the ability of the packaging material to be unwound or to lie flat when unwound. This can be useful with pressurized or non-pressurized containers.

Fig 23:
- Name: Ribbed Can
- Description: Ribbing in the bodystock created by laser, scoring, etc. When the can is opened the spring back is reduced or removed.
- Benefit: No springback upon opening, easy access to product
- Issues: Additional process step, machine mods, or could be performed offline?
- Processes Affected: Feed bodystock
- Manufacturing Route: Knife or laser scoring of bodystock prior to spiral winding.

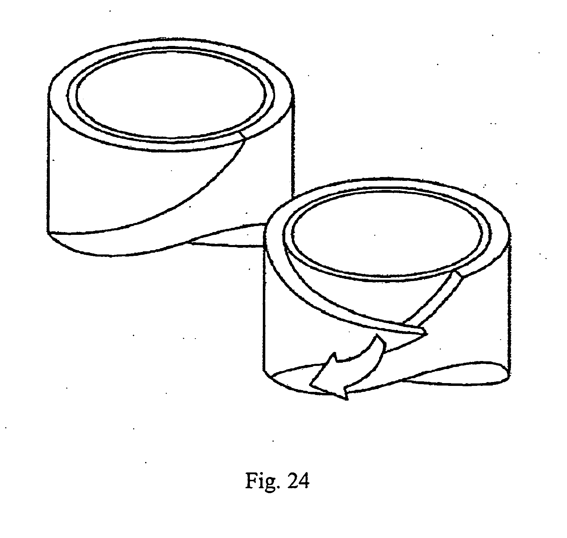

Figure 24 describes the use of a thinner paperboard layer as one constituent of a wound paper or paperboard package. Wound packages can include an inner plastic layer, a paperboard layer, and an external label layer that may include a with or information such as packaging contents or instructions for use. The plastic and paperboard layers conventionally provide a substantial amount of structural strength for the closed container. An embodiment of the invention places more structural strength in the label later, at the external layer of the packaging material. During opening, the external (labeling) layer is removed. Making the external packaging layer out of a relatively increased strength material allows the inner paperboard layer to be of reduced structural strength, which can allow for a wound package design that opens easier upon removal of the external labeling layer. Easier opening of the package upon removal of the labeling layer is beneficial with non-pressurized packages.

Fig 24 :
- Name: Structural Label
- Description: Place more of the structural strength into the label. Ripping the label off leaves less strength in the bodystock hence less spring back.
- Benefit: Less springback from remaining can body. Less strength to hold liner hence more predictable opening.
- Issues: Additional part in can assembly
- Processes Affected: Crimp end cap 1
- Manufacturing Route: Channel could be separate part or integrated into end cap 1

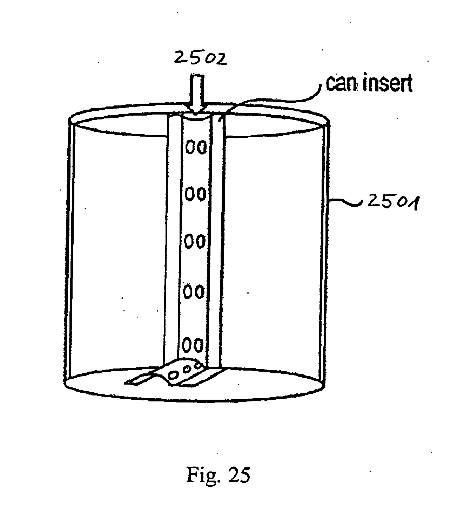

Figure 25 shows another embodiment of a feature that allows pressure equalization as a dough composition during removal of the dough from a package after opening. A channel extends from the opened end to the far end of the package (illustrated as a cylinder), and the channel allows the can (2501) to achieve atmospheric pressure (2502) at the far (closed) end of the can (2501) to improve the ability of dough to be taken from the opened package.

Fig 25:
- Name: Anti-Vacuum Channel
- Description: A channel or vent is revealed when the pack is opened, allowing air to enter the pack around and/or behind the dough, relieving the vacuum suction effect.
- Benefit: Allows easy egress of the dough without the need to destroy the pack.
- Issues: May need to generate an ingress point, weak seam or other clear starting
   point for label removal
- Processes Affected: Feed bodystock, feed label, spiral wound
- Manufacturing Route: Reverse order of can material feeds.

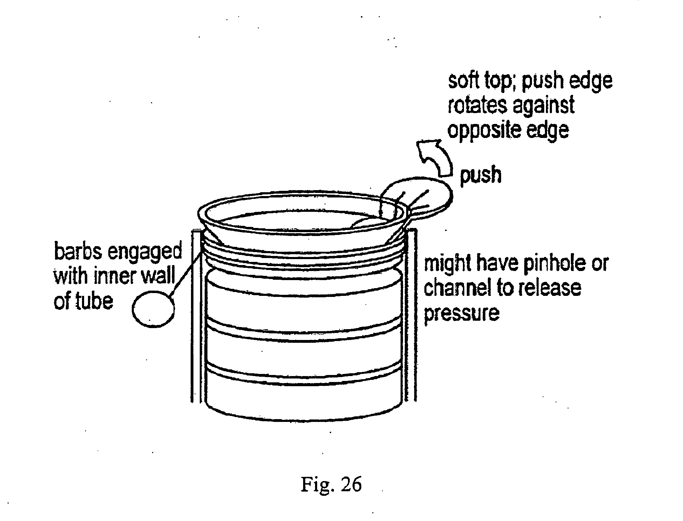

Figure 26 illustrates a flexible endcap that can be used to close an open end of a plastic, metal, or paperboard package, such as tube of a cylindrical shape or other elongate shape. The flexible endcap can engage the interior portion of the package using ribbed or other types of extending, frictionally-engaging surfaces located at the interior side wall surface, on a surface of the perimeter of endcap, or at both surfaces. The endcap is made of a flexible material such as a soft rubber or polymer and can be removed by lifting away from the package, optionally with deformation.

Fig 26 :
- Name: Squidgey End Cap
- Description: Soft deformable top. Strong under hydraulic pressure. Asymmetric force causes top to distort and rotate around opposite edge.
- Benefit: Simple, initiative, resealable
- Issues: Relatively simple
- Processes Affected: Fill
- Manufacturing Route: No change to can.

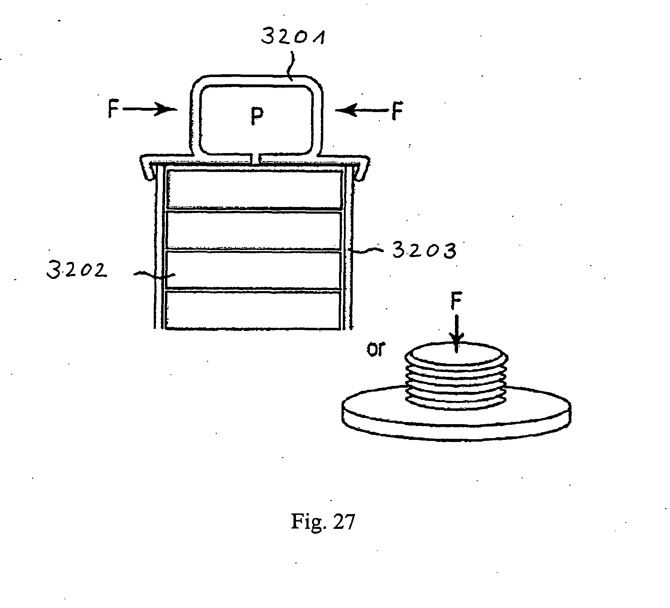

Figure 27 shows an example of an endcap (3201) that includes a pressure reservoir. The can is denoted by reference sign (3203), and the dough is denoted by reference sign (3202). The pressure reservoir is made of a flexible materials such as plastic or another flexible polymer or rubber. The endcapds attached to an end of a package in a manner that produces a seam that will fail by squeezing the pressure reservoir, which increases the pressure inside of the container.

Fig 27:
- Name: Pressure Reservoir End Cap
- Description: A deformable (probably plastic) end cap with internal volume and a small vent hole to the cap inner space. The user squeezes the cup, causing an increase in can pressure which causes, the can to fail or the end cap to pop off
- Benefit: Easy removal of end cap or failure of can seam. No destruction of instructions (potentially).
- Issues: New crimping process
- Processes Affected: Crimp end cap 2
- Manufacturing Route: Attach plastic moulded end cap, maybe adhesive bond or
   heat stake

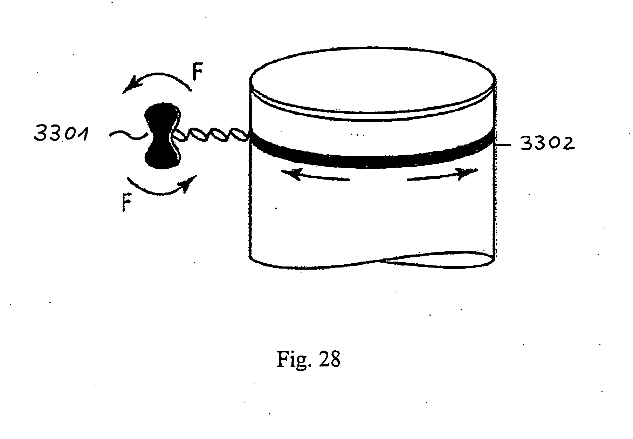

Figure 28 shows a method of opening a package using a tool to unwind an elongate strip or wire. The package includes a seam that is integrated with the wire or strip such as an inelastic flexible strip of wire or cord. A tool, which optionally is sold with the package, engages the wire, strip, or cord. The tool can be twisted or turned using a handle (3301), causing the wire, strip, or cord to become wrapped around the tool and disengaged from the package, to open a seam in the package.

Fig 28 :
- Name: Garotte (3302)
- Description: A constrictive member is attached to the end of the can. The user twists the loop of wire, imparting a compressive stress in the can, causing failure. Large multiplication of torque applied.
- Benefit: Easy end cap removal with an integrated tool
- Issues: Revised end cap 2, or separate part
- Processes Affected: Cut to length, crimp end cap 2
- Manufacturing Route: Add new part onto cap 2 of filled can, or could be integrated into end cap 2, create weakened seam around can periphery.

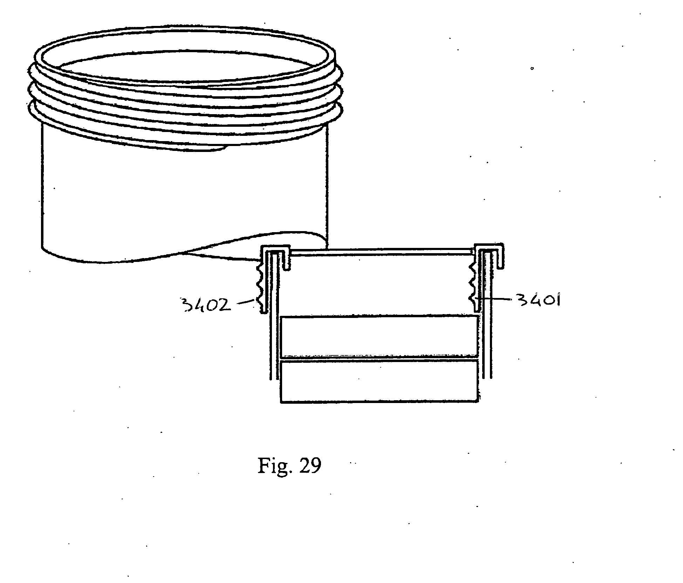

Figure 29 illustrates a threaded package closing configuration for use at an end of a cylindrical package configuration, such as a package described herein to be vented, non-vented, pressurized, non-pressurized, etc. Threads may be used to allow an endcap to engage a cylindrical end of a package. The threads may be internal (3401) to the endcap, external (3402) to the endcap, internal to the cylindrical sidewalls, or external to the cylindrical sidewalls. The cylinder may be metal, plastic, or paperboard or paperboard, as can be the endcap.

Fig 29 :
- Name: Threaded End Cap
- Description: A threaded end cap is attached to the end of the can using a crimped flange (similar to the existing end cap). A lid is screwed on, user opens the can by unscrewing the lid. N.B. Lid could be the icing cup, combining the two parts into one
- Benefit: Conventional intuitive opening of the can.

Potential to use the icing cup as a functioning sealing cap.

Gas venting and sealing method based on current method.
- Issues: 2 part end cap 2, sealing and dough ingress into joint
- Processes Affected: Crimp end cap 2
- Manufacturing Route: Crimp threaded portion as per existing process, add closure

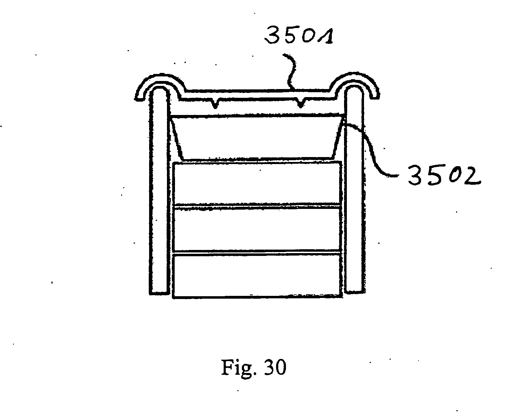

Figure 30 illustrates a package configuration that includes an internal disk to provide gas venting and sealing function, and a external lid or endcap that allows for mechanical integrity of the packaging. The external endcap is not required to provide a sealing function. The internal disk can provide gas venting functions by any means such as vents, channels, tortuous path, as described herein or otherwise; the disk may provide sealing functions by mechanical or self-sealing mechanisms as described herein or otherwise.

In Fig. 30, by reference sign (3501) it is shown that a can lid prevents internal disc from moving. By reference sign (3502) it is shown that an interference fit disc provides gas vent and seal.
- Name: Internal Seal
- Description: Use an interference fit disc as used to seal icing as the gas vent and seal. End cap only maintains mechanical integrity of the packaging, holding the internal seal in place. A variety of end cap systems could be employed.
- Benefit: Separates mechanical seal and gas seal properties. Allows a wide range of end cap systems to be employed. Can is able to unwind without being held by the sealing component.
- Issues: 2 parts at each end cap
- Processes Affected: Fill, crimp end caps
- Manufacturing Route: Pick and place additional parts, various options for the outer cap.

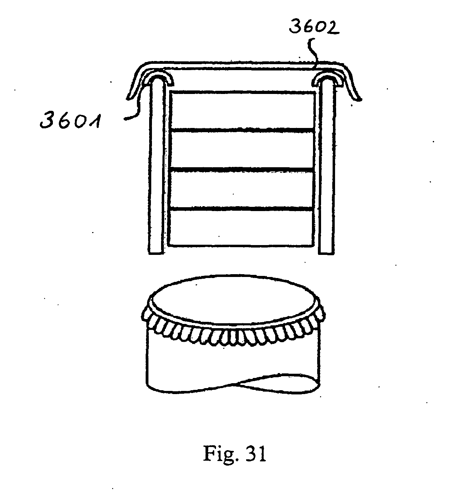

Figure 31 illustrates an embodiment of a sealed cylinder end that includes a crimped rim (3601) and a crown cap. The end can be opened using conventional bottle cap or can opener.

Fig 31:
- Name: Crown Cork End Cap
- Description: A rigid rim is crimped to the end of the can this provides the same venting and sealing functionality as the current crimped end. A crown cork cap (3602) is attached over the rim, hermetically sealed. The crown cork is opened using a bottle or can opener.
- Benefit: Conventional intuitive opening of the can. Based on current venting mechanism.
- Issues: Rigidity of can end and/or additional rim
- Processes Affected: Crimp end cap 2
- Manufacturing Route: Adapt new process from conventional bottling line
   technology

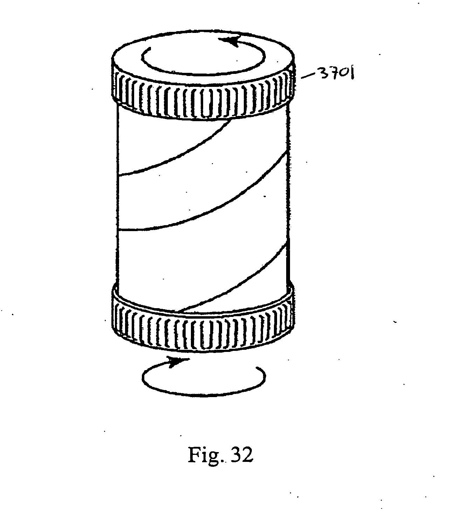

Figure 32 illustrates an embodiment of a sealed cylinder end that includes a frictional grip easy gripe ends (3701) that allows secure handling of the ends. The ends can twist in opposite directions to open the wound package by breaking the bond of the wound material at a seam.

Fig 32 :
- Name: Twist Grip
- Description: Ensure both ends of the can can be securely gripped. Twist the ends in opposite directions to force failure of the bodystock seam.
- Benefit: Intuitive opening method
- Issues: Additional parts, extra process step, larger diameter for packing
- Processes Affected: Cut to length, crimp end caps, secondary package
- Manufacturing Route: Revise end caps to include knurled section, add grippy bands
   etc. >

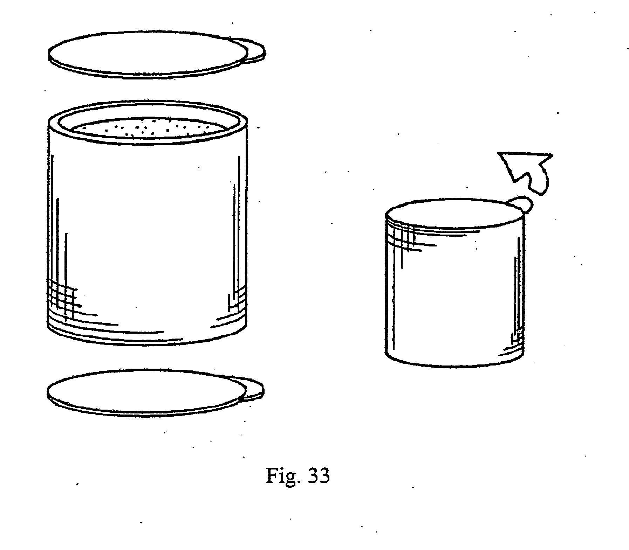

Figure 33 shows an example of a sealed package, the package being made from an extruded cylinder, the end having a lip that can attach to an end cap in the form of a film or sheet. The endcap can be secured to the lip by heat sealing or adhesive.

Fig 33:
- Name: Simple Extrusion
- Description: Plain extruded cylinder (with ribbing if structurally required) end caps can be heat sealed film. Venting could be provided in film similarly to coffee packs.
- Benefit: Low cost. Simple.
- Issues: Material selection, barrier properties
- Processes Affected: Feed bodystock, feed label, spiral wind, crimp end caps
- Manufacturing Route: Extrude, cut to length

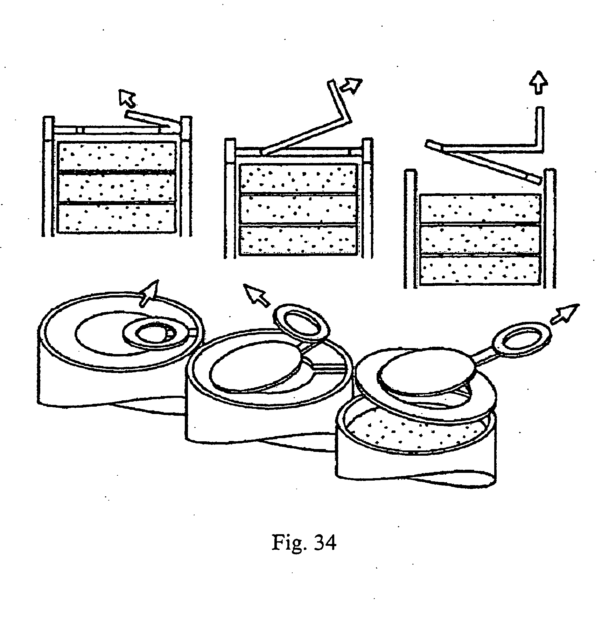

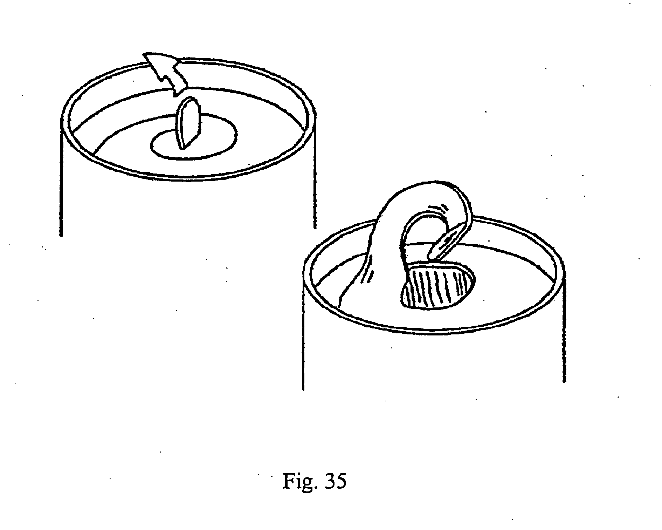

Figure 34 illustrates an example of a plastic or metal end cap that attached at a perimeter of a cylinder and that can be removed in multiple sections or pieces. The cylinder may be paperboard, plastic, or metal, and the end cap may be attached by crimping, thermoforming, heat sealing, adhesive, or the like. The plastic or metal endcap includes scoring or other weakening to allow a section of the end to be pulled using a tab (e.g., circular pull tab) so the end cap peels or tears away in sections to open the end of the package. Figure 35 shows a similar embodiment with weakening or scoring of the end cap to allow the endcap to be opened in a spiral fashion.

Fig 34:
- Name: 2 Stage Ring Pull
- Description: BASED ON IDEA 6: A disc that mechanically pushes against the card cylinder, once the inner section is removed the outer section can contract and be removed from the can.
- Benefit: Potentially intuitive opening, low cost manufacture.
- Issues: technically challenging to achieve repeatability in opening action
- Processes Affected: crimp end cap 2
- Manufacturing Route: injection mould

Fig 35:
- Name: Spiral Tear
- Description: BASED ON IDEA 6 A polymer end cap with a spiral weakened line into it. Therefore to open either:
   - unpeeling the top from the centre removes the pressure on the body walls and allows the cap to be removed
   - the whole cap and body could be unpeeled from the dough
- Benefit: Destruction of end cap/body allows good access to the dough. Easy and obvious opening method.
- Issues: insertion on packing line, repeatability and fit
- Processes Affected: Crimp end cap 2
- Manufacturing Route: injection moulded, or scored flat card

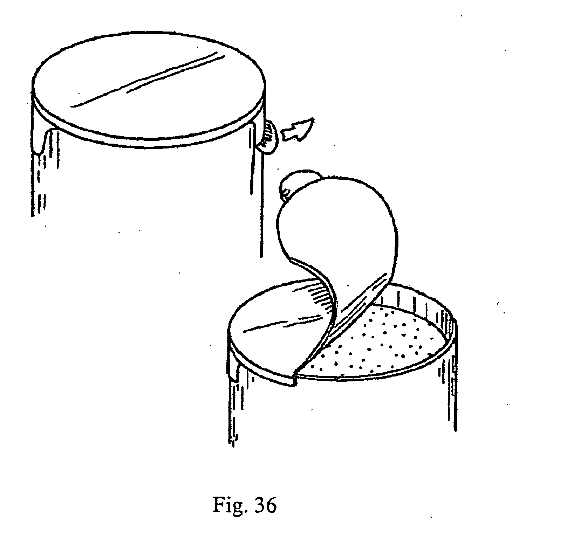

Figure 36 shows another embodiment of a package that includes a film or sheet that covers an end cap. The film or sheet is attached to the end of the package by, e.g., heat sealing or adhesive. The end cap can be removed by pulling on a tab to overcome the adhesive force.

Fig 36:
- Name: Peel Lid
- Description: BASED ON IDEA 53 A film is bonded onto the sides of the cylinder and is simply peeled off. Selective bond strength could be used to give different opening properties.
- Benefit: Low cost. Simple. Intuitive.
- Issues: seal integrity, mechanical strength
- Processes Affected: crimp end cap 2
- Manufacturing Route: die cut of moulded part, bonded to can post ill

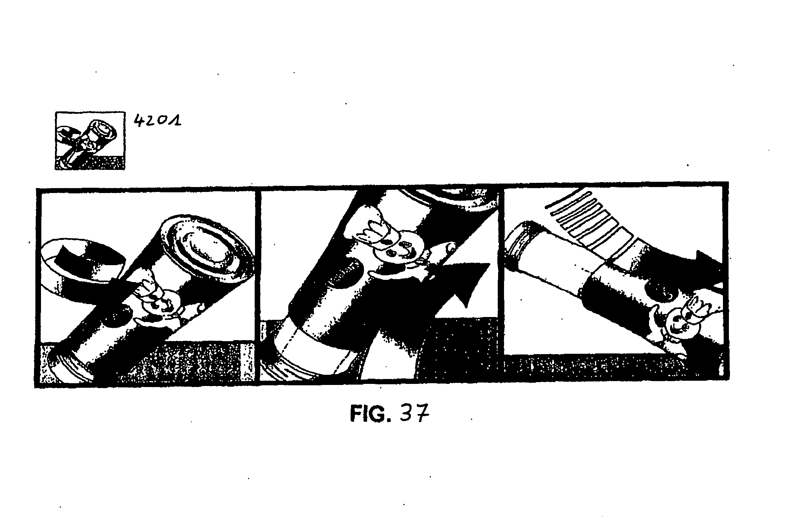

Figure 37 shows the use of screw thread (4201) end cap such as illustrated at figure 29. The package of figure 37 can optionally also include a feature to equalize pressure within the container to allow the dough to be removed, such as described herein.

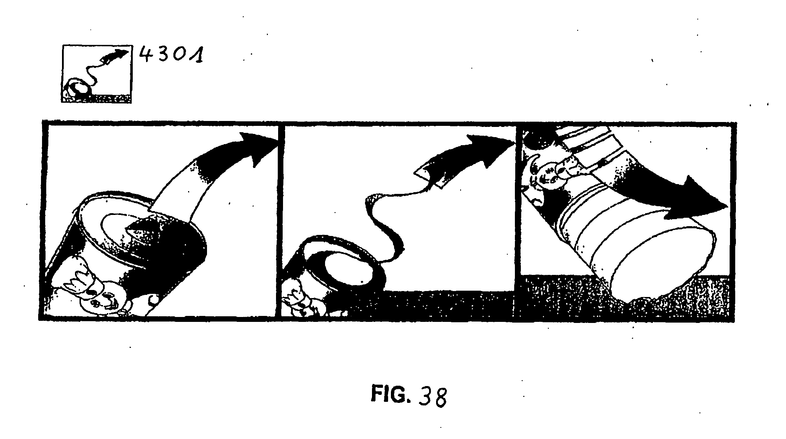

Figure 38 illustrates the endcap of figure 35, which can be opened by a spiral tear (4301) of a scored or weakened endcap. It will be also described additional, optional features of this embodiment, and possible benefits to a user:

### Spiral Tear-User experience

- How does it work?
   ○ Pulling the tab propagates a tear outwards opening the end of the can. This tear could also run down the body of the can if desired.
   ○ Loose liner could be integrated if required allowing access to the dough and icing cup
- Benefits
   ○ Unique opening
   ○ Instructions not damaged during opening
   ○ No rewind

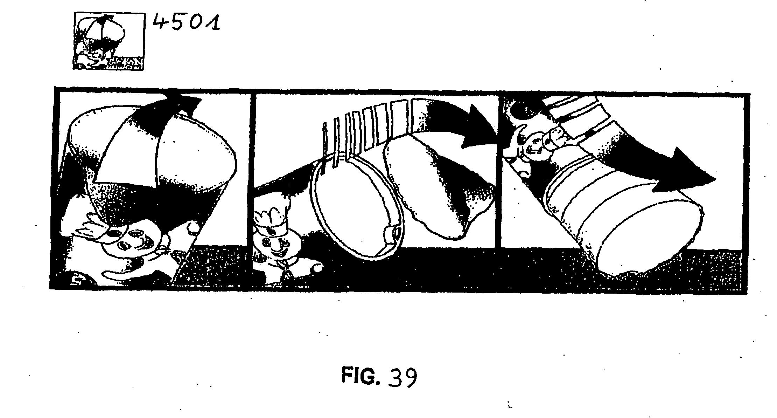

Figure 39 illustrates a use of a package having a peelable lid (4501), such as described herein (e.g., at figure 36), in combination with a pressure equalizer (e.g., at figure 25). The combination allows for removal of dough portions out the opened end, with pressure equalization at the closed end. It will be also described exemplary manners of uses of a peelable lid, various use configurations, and possible advantages:

### Peel lid-User Experience

- How does it work?
   ○ Pulling back the tab peels open the end of the can
   ○ Loose liner would provide easy removal of the dough and hold icing cup intact during removal
   ○ A peel lid could be attached to both ends to aid dough removal
- Benefits
   ○ Simple, familiar opening method
   ○ Instructions not damaged during opening
   ○ Modification to existing lid design only
   ○ No rewind

The following is a discussion of packaging materials, geometry, and closure methods, that can be useful with packages, e.g., low pressure packages, in combination with other features described herein.

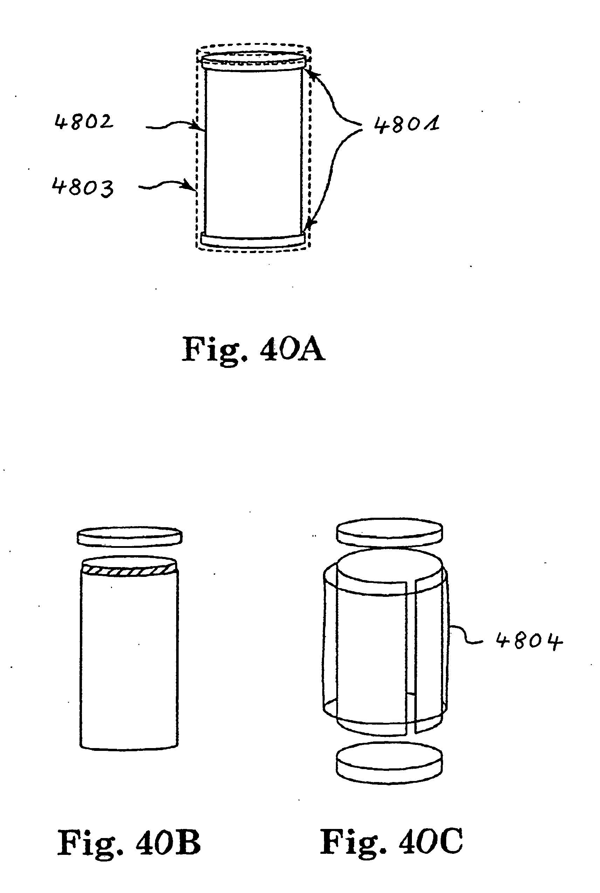

Figure 40 illustrates cylindrical containers with endcaps held in place by a shrinkwrap label (40A); an endcap held to a package by a threaded closure (40B); and a package that has endcaps secured to a container by any method, with a package body held in place using shrinkwrap that can optionally include labeling information (40C).

Caption as to Fig. 40A: End closures (4801) held in place on can body (4802) with full shrink label (4803) or partial shrink bands.

Caption as to Fig. 40B: End affixes to can body with threaded closure.

Caption as to Fig. 40C: shrink band/label holds body panel closed. Reference sign (4804) denotes a shrink body label.

### Body Materials

The body of the can could be constructed with laminated or coated paperboard and formed by a spiral wound or convolute process. Alternately, the body could be blow molded or thermoformed with a rigid plastic material.

### End Materials

The ends could be composed of laminated paperboard, coated paperboard, rigid plastic, flexible laminate, foil, metal, or a composite of the aforementioned materials.

### Can Profile

The container could have a round profile, or another shape such as a square-round, hexagon, or oval could be formed.

### Closure Methods

The ends could be affixed to the can body by heat sealing, spin welding, a mechanical locking system, threads, or held in place with an outer shrink band or label.

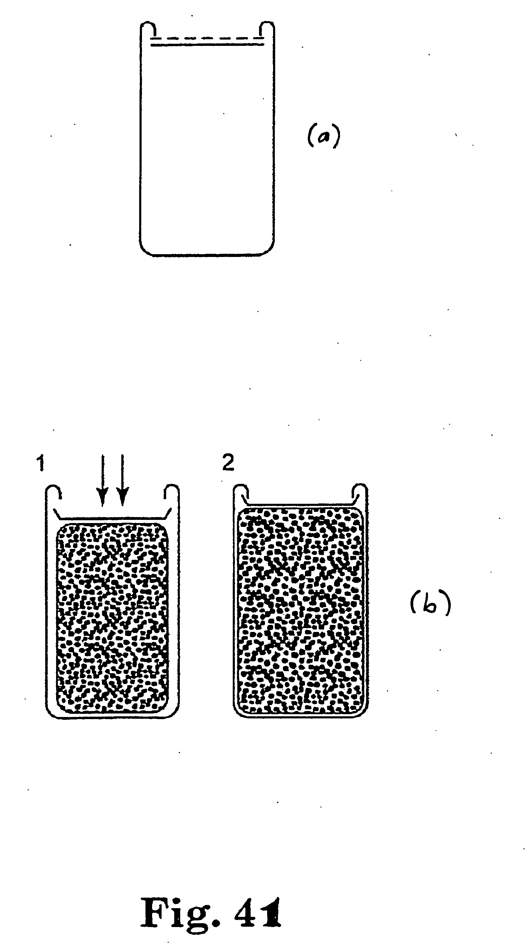

Figure 41 illustrates structures and methods of sealing a vented package by expansion of dough internally to close a vent from within by pressure on a mechanical structure (e.g., as described generally at figures 4, 5, 6 and 7). The can may be pressurized or non-pressurized after the dough has expanded inside of the package.

Caption as to Fig. 41 (a): Layer of vented paperboard, film, or flexible laminate above layer of non-vented material. Gas permeates through non-vented layer and exits at vents. Caption as to Fig. 41(b): 1. Can is filled with dough. Then, the end closure is inserted into the can. 2. As the dough proofs and expands, the end closure is pushed upwards and mechanically locks into place.

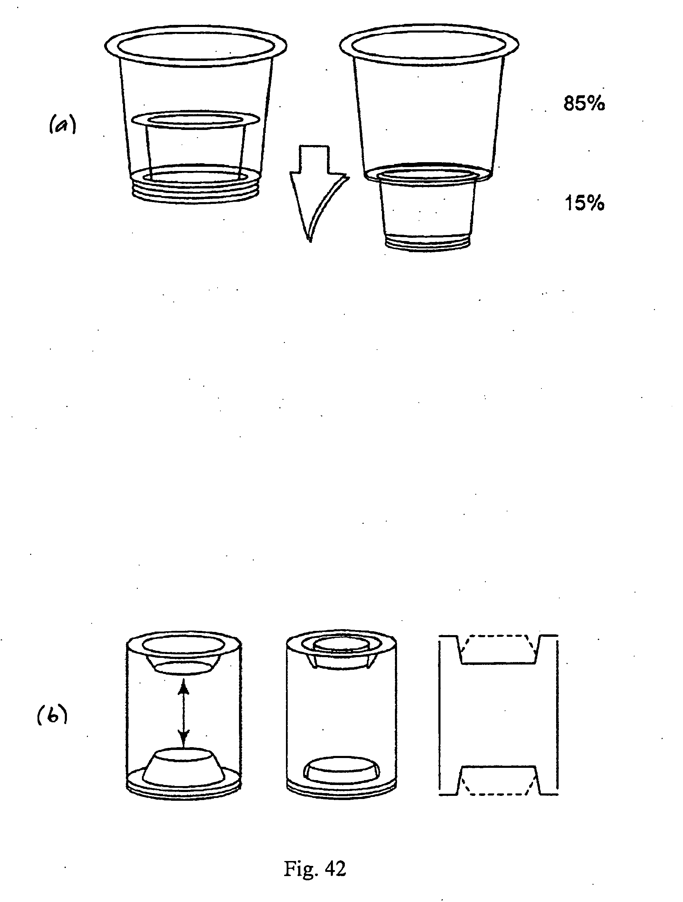

Figure 42 illustrates structures and methods related to expanding-volume packages that can increase in volume to accommodate a dough composition that expands during proofing within the package (see, e.g., figures 8, 9, 10, 11, and 12 as well as the respective passages of the description. The can may be pressurized or non-pressurized after the dough has expanded inside of the package.

The following description as to Fig. 42 is taken from original Fig. 50 (of WO 2008/141267):
Caption as to Fig. 42(a): ② parts expand.
   Push-up bottom for opening.
Caption as to Fig. 42(b): 21. Controlled pop-out sink panels. Variable volume containers.

## Claims

1. A dough product package comprising
a tubular container having a volume, sides, and an end opening,
an endcap placed to cover the end opening,
a vent, **characterized in that** it further comprises
a moveable valve, the moveable valve comprising a closure capable of exhibiting an open configuration and a closed configuration and that is biased to the open configuration, wherein when dough is placed inside the container to expand upon proofing, the closure will remain in the open configuration to allow gas from inside the container to be expelled through the vent, until the dough expands a sufficient amount to contact the moveable valve to cause the closure to close the vent.

2. The dough product package of claim 1 wherein the endcap comprises the moveable valve.

3. A dough product package according to claim 1 or 2 comprising
the tubular container having a variable volume with an initial volume and an expanded volume,
wherein when dough is placed inside the container to expand upon proofing, the dough can expand within the container, and the container can expand to a volume between the initial volume and the expanded volume.

4. A packaged dough product comprising a package according to claim 3, wherein
the container at the initial volume contains dough, and the internal package pressure is below 1 atmosphere (gauge), and
the dough expands within the container and the package expands to the expanded volume, and the internal pressure is between 0 and 1 atmosphere (gauge).

5. A dough product package according to any of claims 1 to 3, the package comprising an osmotically permeable material that allows oxygen and carbon dioxide to pass but does not allow water to pass.

6. A dough product package according to any of claims 1 to 3 or 5, wherein the endcap is bonded to the sides by adhesive to cover the end opening and seal the container, and the container can be opened by breaking the adhesive bond.

7. A dough product package according to any of claims 1 to 3, wherein
the endcap is secured to the sides by mechanical fastening, to cover the end opening, and
the endcap or a portion of the endcap can be removed to open the-container to remove contents of the container.

8. A dough product package according to any of claims 1 to 3 or 6 to 7 wherein the tubular container is ribbed in a lengthwise direction by scoring.

9. A method of packaging and storing a dough product comprising placing dough in a package as recited in any of claims 1 to 3 or 6 to 8, and storing the dough at refrigerated temperature.

10. The method of claim 9 wherein the method comprises, after the storing step, the step of opening the tube at an endcap.

## Patentansprüche

1. Verpackung für Teigprodukt, umfassend:
einen rohrförmigen Behälter mit einem Volumen, Seiten und einer Endöffnung, wobei eine Endkappe zum Abdecken der Endöffnung, einer Entlüftung, angeordnet ist, **dadurch gekennzeichnet, dass** sie ferner Folgendes umfasst:
ein bewegliches Ventil, wobei das bewegliche Ventil einen Verschluss umfasst, der eine offene Konfiguration und eine geschlossene Konfiguration aufweisen kann und in die offene Konfiguration vorgespannt ist, wobei, wenn Teig in dem Behälter angeordnet ist, um sich beim Garen auszudehnen, der Verschluss in der offenen Konfiguration verbleibt, damit Gas aus dem Inneren des Behälters durch die Entlüftung entweichen kann, bis der Teig ausreichend ausgedehnt ist, um das bewegliche Ventil zu berühren und zu bewirken, dass der Verschluss die Entlüftung schließt.

2. Verpackung für Teigprodukt nach Anspruch 1, wobei die Endkappe das bewegliche Ventil umfasst.

3. Verpackung für Teigprodukt nach Anspruch 1 oder 2, umfassend:
den rohrförmigen Behälter mit einem variablen Volumen mit einem anfänglichen Volumen und einem ausgedehnten Volumen,
wobei, wenn der Teig in dem Behälter angeordnet ist, um sich beim Garen auszudehnen, sich der Teig in dem Behälter ausdehnen kann und sich der Behälter zu einem Volumen ausdehnen kann, das sich zwischen dem anfänglichen Volumen und dem ausgedehnten Volumen befindet.

4. Verpacktes Teigprodukt, umfassend eine Verpackung nach Anspruch 3, wobei
der Behälter bei dem anfänglichen Volumen Teig enthält und der innere Verpackungsdruck unter 1 Atmosphäre (Maß) liegt, und
sich der Teig in dem Behälter und der Verpackung zu dem ausgedehnten Fassungsvermögen ausdehnt, wobei der Innendruck zwischen 0 und 1 Atmosphäre liegt (Maß).

5. Verpackung für Teigprodukt nach einem der Ansprüche 1 bis 3, wobei die Verpackung ein osmotisch durchlässiges Material umfasst, das ermöglicht, dass Sauerstoff und Kohlenstoffdioxid durchdringen, jedoch kein Wasser durchdringen kann.

6. Verpackung für Teigprodukt nach einem der Ansprüche 1 bis 3 oder 5, wobei die Endkappe mit den Seiten mithilfe eines Klebers verbunden ist, um die Endöffnung zu bedecken und den Behälter abzudichten, und der Behälter durch Aufbrechen der Klebeverbindung geöffnet werden kann.

7. Verpackung für Teigprodukt nach einem der Ansprüche 1 bis 3, wobei
die Endkappe an den Seiten durch mechanische Befestigungsmittel gesichert ist, um die Endöffnung abzudecken, und
die Endkappe oder ein Abschnitt der Endkappe entfernt werden kann, um den Behälter zu öffnen, um Inhalte aus dem Behälter zu entfernen.

8. Verpackung für Teigprodukt nach einem der Ansprüche 1 bis 3 oder 6 bis 7, wobei der rohrförmige Behälter in Längsrichtung mit Ritzen gerippt ist.

9. Verfahren zum Verpacken und Lagern eines Teigproduktes, umfassend
Anordnen des Teigs in einer Verpackung nach einem der Ansprüche 1 bis 3 oder 6 bis 8 und Lagern des Teigs bei gekühlter Temperatur.

10. Verfahren nach Anspruch 9, wobei das Verfahren nach dem Lagerungsschritt den Schritt des Öffnens des Rohrs an der Endkappe umfasst.

## Revendications

1. Emballage de produit pâteux, comprenant un récipient tubulaire ayant un volume, des côtés et une ouverture d'extrémité,
un capuchon d'extrémité placé de manière à couvrir l'ouverture d'extrémité,
un évent, **caractérisé en ce qu'**il comprend en outre
une valve déplaçable, la valve déplaçable comprenant une fermeture capable de présenter une configuration ouverte et une configuration fermée et qui est précontrainte dans la configuration ouverte, dans lequel, lorsque de la pâte est placée à l'intérieur du récipient de manière à augmenter de volume lorsqu'elle lève, la fermeture restera dans la configuration ouverte pour permettre au gaz à l'intérieur du récipient d'être expulsé à travers l'évent, jusqu'à ce que la pâte ait augmenté de volume jusqu'à une mesure suffisante pour venir en contact avec la valve déplaçable pour amener la fermeture à fermer l'évent.

2. Emballage de produit pâteux selon la revendication 1, dans lequel le capuchon d'extrémité comprend la soupape déplaçable.

3. Emballage de produit pâteux selon la revendication 1 ou 2, comprenant
le récipient tubulaire ayant un volume variable avec un volume initial et un volume augmenté,
dans lequel, lorsque de la pâte est placée à l'intérieur du récipient de manière à augmenter de volume lorsqu'elle lève, la pâte peut augmenter de volume à l'intérieur du récipient, et le récipient peut augmenter de volume jusqu'à un volume compris entre le volume initial et le volume augmenté.

4. Produit pâteux emballé comprenant un emballage selon la revendication 3, dans lequel le récipient au volume initial contient de la pâte et l'emballage interne est soumis à une pression en dessous de 1 atmosphère (pression relative), et la pâte augmente de volume à l'intérieur du récipient et l'emballage augmente de volume jusqu'au volume augmenté, et la pression interne est comprise entre 0 et 1 atmosphère (pression relative).

5. Emballage de produit pâteux selon l'une quelconque des revendications 1 à 3, l'emballage comprenant un matériau perméable par voie osmotique qui permet à l'oxygène et au dioxyde de carbone de passer mais ne permet pas à l'eau de passer.

6. Emballage de produit pâteux selon l'une quelconque des revendications 1 à 3 ou 5, dans lequel le capuchon d'extrémité est collé aux côtés par un adhésif de manière à recouvrir l'ouverture d'extrémité et à sceller le récipient, et le récipient peut être ouvert en cassant la liaison adhésive.

7. Emballage de produit pâteux selon l'une quelconque des revendications 1 à 3, dans lequel le capuchon d'extrémité est fixé aux côtés par une attache mécanique, de manière à couvrir l'ouverture d'extrémité, et
le capuchon d'extrémité ou une portion du capuchon d'extrémité peut être enlevé(e) pour ouvrir le récipient afin d'en retirer le contenu.

8. Emballage de produit pâteux selon l'une quelconque des revendications 1 à 3 ou 6 à 7, dans lequel le récipient tubulaire est nervuré dans la direction longitudinale par entaillage.

9. Procédé d'emballage de stockage d'un produit pâteux, comprenant
l'introduction de pâte dans un emballage selon l'une quelconque des revendications 1 à 3 ou 6 à 8, et
le stockage de la pâte à température de réfrigération.

10. Procédé selon la revendication 9, dans lequel le procédé comprend, après l'étape de stockage, l'étape d'ouverture du tube au niveau d'un capuchon d'extrémité.
